(19) **Europäisches Patentamt European Patent Office Office européen des brevets**

(11) **EP 1 847 965 A1**

(12) **EUROPEAN PATENT APPLICATION**
published in accordance with Art. 158(3) EPC

(43) Date of publication:
**24.10.2007 Bulletin 2007/43**

(51) Int Cl.:
***G06T 15/00*** *(2006.01)* ***G06T 15/40*** *(2006.01)*

(21) Application number: **05822791.9**

(22) Date of filing: **26.12.2005**

(86) International application number:
**PCT/JP2005/024214**

(87) International publication number:
**WO 2006/073131 (13.07.2006 Gazette 2006/28)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.01.2005 JP 2005000089**

(71) Applicant: **SSD Company Limited Kusatsu-shi, Shiga 525-0054 (JP)**

(72) Inventors:
• **KATO, Shuhei,
SSD COMPANY LIMITED
Kusatsu-shi, Shiga 525-0054 (JP)**

• **SANO, Koichi,
SSD COMPANY LIMITED
Kusatsu-shi, Shiga 525-0054 (JP)**
• **USAMI, Koichi,
SSD COMPANY LIMITED
Kusatsu-shi, Shiga 525-0054 (JP)**

(74) Representative: **Chaillot, Geneviève et al
Cabinet Chaillot
16-20, avenue de L'Agent Sarre
B.P. 74
92703 Colombes Cédex (FR)**

(54) **PLOTTING DEVICE AND PLOTTING METHOD**

(57)    A YSU (19) sorts structure instances #0 to #7 in order that the polygons #0 to #7 corresponding thereto are arranged in ascending order of the minimum Y-coordinates thereof. An RPU (9) sequentially reads the structure instances #0 to #7 sorted by the YSU (19), and performs the drawing process of corresponding polygons on the basis of the structure instances as read.

Fig. 1

**EP 1 847 965 A1**

**Description**

Technical Field

The present invention relates to a drawing apparatus and the related arts in which high quality three-dimensional images can be displayed without the use of a frame buffer.

Background Art

In the prior art, for displaying three-dimensional images, an image generating apparatus is usually implemented with a frame buffer and a video memory in which one or more frames of image data can be drawn (refer to Japanese Patent Published Application No. Hei 6-348861 and Japanese Patent Published Application No. Hei 7-282270).

However, in the case where such a frame buffer and the like are implemented within the image generating apparatus, a memory with a sufficient capacity is indispensable for storing the entirety of at least one image, and thereby the cost rises. If a double buffering configuration is employed for the purpose of displaying high quality three-dimensional images, it is necessary to provide a memory which can store at least two frame buffers, and thereby the cost further rises.

On the other hand, in the case where only two-dimensional images are displayed, a frame buffer is not necessarily required, but a line buffer may be adequate to replace it. However, in the case where three-dimensional images are displayed by the use of a line buffer, it is difficult to display high quality images with which viewers will be satisfied, for example, because the number of polygons which can be drawn is limited due to the drawing power of a conventional image generating apparatus.

It is therefore an object of the present invention to provide a drawing apparatus and the related arts which make it possible to display high quality three-dimensional images only by the use of a buffer of a small storage capacity for drawing.

Also, it is therefore an object of the present invention to provide a drawing apparatus and the related arts which make it possible to display high quality three-dimensional images, while enabling translucent composition, only by the use of a buffer of a small storage capacity for drawing.

Furthermore, it is another object of the present invention to provide a drawing apparatus and the related arts which make it possible to display high quality three-dimensional images, even in interlaced scanning, only by the use of a buffer of a small storage capacity for drawing.

Disclosure of Invention

In accordance with a first aspect of the present invention, a drawing apparatus is operable to display a screen image composed of a combination of graphic elements on a screen formed by arranging a plurality of parallel lines in a direction perpendicular to the parallel lines, each of which consists of a plurality of pixels, on the basis of display information items provided respectively for graphic elements including polygonal graphic elements, and comprises: a sorting unit operable to rearrange the display information items provided respectively for the graphic elements in order that coordinates contained in the display information items and indicative of the positions of the graphic elements in the direction normal to the line are arranged in either descending order or ascending order; and a drawing unit operable to sequentially read the display information items rearranged by said sorting unit and perform the drawing process of the graphic elements on the basis of the display information items corresponding thereto.

In accordance with this configuration, the display information items provided respectively for the graphic elements are rearranged (sorted) in order that the coordinates indicative of the positions of the graphic elements in the direction normal to the line are arranged in either descending order or ascending order. Accordingly, since the display information items after the sort operation can be simply successively read for the drawing process, it is no longer necessary to search all the display information items for the display information item to be drawn so that the process can be speeded up. As a result, a high capacity buffer for storing one or more frames of image data (such as a frame buffer) is not necessarily implemented, but it is possible to display the screen image by combining a number of graphic elements even if only a smaller capacity buffer (such as a line buffer, or a pixel buffer for drawing pixels short of one line) is implemented. Particularly, this is preferred as the drawing process for displaying three-dimensional images which requires a higher processing capacity than for displaying two-dimensional images.

In this description, the ascending order is the order that the elements are arranged from a larger one to a smaller one, and the descending order is the order that the elements are arranged from a smaller one to a larger one.

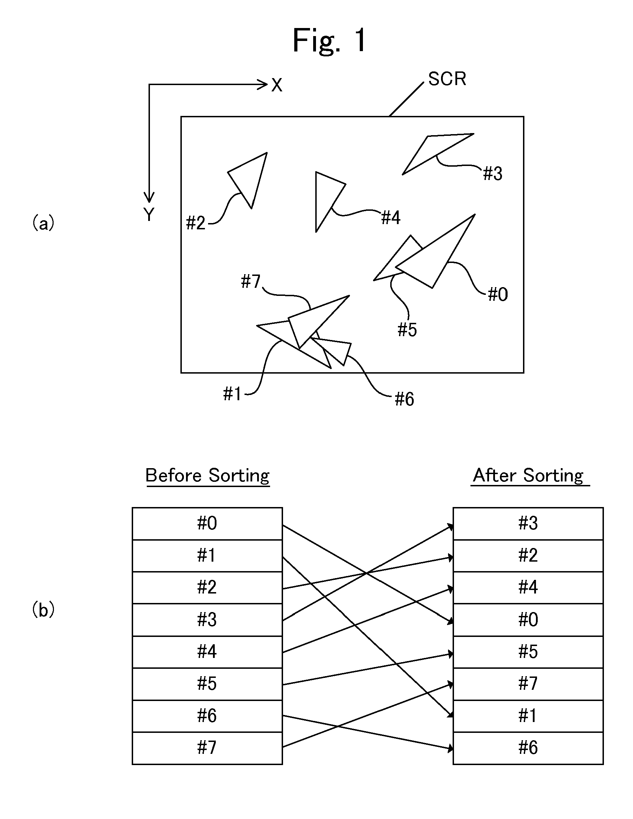

In the above drawing apparatus, said drawing unit include: a first buffer (which corresponds, for example, to the line buffers LB1 and LB2 shown in Fig. 1) capable of storing pixel information corresponding to a first predetermined number of pixels of the pixels forming the screen, and operable to output the pixel information for the purpose of displaying the screen image, and store new pixel information for displaying the screen image in the location used for storing the pixel information as output; a second buffer (which corresponds, for example, to the recycle buffer 110 shown in Fig. 1) capable of storing the display information items corresponding to a second predetermined number of the graphic elements, and operable to store the display information items in the order that they are transferred for reuse when the display information items can be reused for the purpose of storing other pixel information on the basis of the display information items in said first buffer after the pixel information on the basis of the display information items is stored in said first buffer, and output the display information items in the order as stored if it arrives when the new pixel information is stored in said first buffer; a comparing unit operable to compare display depth information item contained in, among the display information items which are read in the order as rearranged by said sorting unit, the display information item for generating the new pixel information if it arrives when the new pixel information is stored in said first buffer and display depth information item contained in the display information item as output from said second buffer, and select and output first either of the display information items on the basis of a predetermined rule; and a writing unit operable to generate the pixel information on the basis of the display information item as output from said comparing unit and write the pixel information as generated to said first buffer as the new pixel information.

In accordance with this configuration, when the display information items can be reused for the purpose of writing new pixel information to the first buffer (drawing new pixels), these display information items are stored in the second buffer. Because of this, the same display information item need not repeatedly be read from the memory storing all the display information items as sorted every time new pixels are drawn by the use of the same display information item, so that the process can be speeded up.

In addition to this, the comparing unit is provided for determining the drawing order between the display information item stored in the second buffer for reuse and the display information item which is read anew in the order as sorted by the sorting unit (i.e., the order of drawing the pixels corresponding to these display information items). Because of this, the display information items which can be reused are stored in the second buffer in appropriate drawing order only by storing, in order, the display information item which can be reused after the determination process in the second buffer. As has been discussed above, while the display information items which can be reused are stored in the second buffer in appropriate order, these display information items are checked again to determine the order of drawing together with the display information item which is read anew in the order as sorted by the sorting unit, and therefore it is possible to draw the display information items in appropriate drawing order.

In the above drawing apparatus, when a plurality of the graphic elements are displayed and the coordinates of the plurality of the graphic elements are equal, said sorting unit arranges the display information items corresponding to the plurality of the graphic elements in either ascending order or descending order of the depth values indicated by the display depth information items which are contained in the display information items.

In accordance with this configuration, when a plurality of the graphic elements are displayed and the coordinates of the plurality of the graphic elements are equal, the display information items are arranged in either ascending order or descending order of the display depth values on each line of the screen. Accordingly, on each line, the graphic elements on the basis of the display information items are drawn in either ascending order or descending order of the display depth values. In the case where the display information items are arranged in ascending order of the display depth values, since the graphic elements are drawn from the element having a smaller display depth value, the image as displayed looks better even if drawing the graphic elements in deeper display positions is completely performed. On the other hand, in the case where the display information items are arranged in descending order of the display depth values, since the graphic elements are drawn from the element having a larger display depth value, the translucent composition process can be appropriately performed. This is because the pixel drawing color of a translucent graphic element depends on the pixel drawing color of the graphic element located behind the translucent graphic element, so that the graphic elements must be drawn from the deeper position.

In the above drawing apparatus, when a plurality of the graphic elements respectively include pixels to be displayed on the top line of the screen, said sorting unit arranges the display information items corresponding to the plurality of these graphic elements in either ascending order or descending order of the depth values irrespective of the magnitude relation of the coordinates.

In accordance with this configuration, when a plurality of the graphic elements respectively include pixels to be displayed on the top line of the screen, the display information items are arranged in either ascending order or descending order of the display depth values on each line of the screen irrespective of the coordinates thereof, i.e., on the assumption that the coordinates thereof are equal. Accordingly, on the top line, the graphic elements corresponding to display information items are drawn in descending or ascending order of the display depth values. In the case where the display information items are sorted in the order of the display coordinates (in the order of the coordinates of the graphic elements in the direction normal to the line) while the display information items having the same display coordinate are sorted in the order of the display depth values, it is not always guaranteed on the top line that the drawing process is performed in descending or ascending order of the display depth values. However, in accordance with this configuration, it is possible to perform the drawing process from the top line in the order of the display depth values. The advantages of the arrangement in ascending or descending order of the display depth values are the same as described above.

In the above drawing apparatus, each time the rearrangement of display information items provided respectively for a predetermined number of the graphic elements is completed, said sorting unit notifies the completion to said drawing unit, wherein said drawing unit receives the notification from said sorting unit, and sequentially reads the display information items which have been rearranged.

In accordance with this configuration, each time a sort result of the display information items is fixed, this fact is notified so that the drawing unit can read a display information item one after another without waiting for the completion of the sort operation of all the display information items.

In the above drawing apparatus, the predetermined number is a single.

In accordance with this configuration, each time one graphic element is fixed as a sort result, this fact is notified so that the drawing unit can read the fixed graphic element just after the sort operation is completed.

In the above drawing apparatus, said drawing unit further includes a third buffer (which corresponds, for example, to the prefetch buffer 108 shown in Fig. 1) in addition to the first buffer and the second buffer. This third buffer is capable of storing the display information items corresponding to a third predetermined number of the graphic elements, and operable to store the display information items, which are read in the order as rearranged by said sorting unit, in the order as read, and outputs, in the order as stored, the display information item for generating the new pixel information if it arrives when the new pixel information is stored in said first buffer, wherein said comparing unit compares the display depth information item contained in the display information item as output from said third buffer and the display depth information item contained in the display information item as stored in the order that they are transferred for reuse and output from said second buffer, and select and output first either of the display information items on the basis of the predetermined rule.

In accordance with this configuration, while the third buffer is provided, this third buffer serves as a buffering mechanism for buffering the timing of inputting the display information items in the order as sorted by the sorting unit and the timing of outputting the display information items to the comparing unit. By this mechanism, it is possible to shorten the waiting time of the drawing unit for the display information items which are input in the order as sorted by the sorting unit.

In the drawing apparatus, said predetermined rule is such that, as a result of the comparison, the display information item containing the display depth information item indicative of the larger display depth value is selected.

In accordance with this configuration, the graphic elements are drawn in descending order of the display depth values. As a result, the translucent composition process can be appropriately performed.

In the drawing apparatus, the coordinates of the graphic elements which are used when said sorting unit performs the rearrangement operation are the coordinates of vertices of the graphic elements, and are either the maximum coordinates or the minimum coordinates.

In accordance with this configuration, since all the graphic elements can be sorted in the same condition, the drawing process can be performed in an appropriate drawing order.

In the drawing apparatus, said first buffer is a buffer which stores a plurality items of the pixel information of which at least one of the lines is made.

In accordance with this configuration, it is possible to reduce the cost lower than as needed when a frame buffer is used. In addition, it is possible to realize the drawing process in a circuit configuration which is simpler (controlled in a simpler manner) than as required when a pixel buffer is used for storing pixel data short of one line.

In the drawing apparatus, the display information items are rearranged by said sorting unit on the basis of heap sort.

In accordance with this configuration, since the display information items are fixed one after another as the sort results, it is easy to realize the mechanism of notifying the fact each time a sort result is fixed. In addition, it is possible to reduce the fluctuation in the time required for performing the sort operation of all the display information items.

In the drawing apparatus, said sorting unit separately performs the rearrangement operation of the display information items for displaying polygons as the graphic elements and the rearrangement operation of the display information items for displaying sprites as the graphic elements.

In accordance with this configuration, even if the display information item for polygons and the display information item for sprites have different formats and different sizes, it is possible to easily perform the sort operation, and the utilization efficiency of the memory area for storing the display information items can be improved.

In the drawing apparatus, said drawing unit further includes a merge sort unit operable to merge sort the display information items for the polygons rearranged by said sorting unit and the display information items for the sprites rearranged by said sorting unit in accordance with the rule of the rearrangement operation by said sorting unit.

In accordance with this configuration, even if polygons and sprites are separately sorted, the drawing process can be correctly performed by merge sorting the display information item group for polygons and the display information item group for sprites in advance of the drawing process.

In accordance with a second aspect of the present invention, a drawing apparatus is operable to display a screen image composed of a combination of graphic elements by interlaced scanning on a screen formed by arranging a plurality of parallel lines in a direction perpendicular to the parallel lines, each of which consists of a plurality of pixels, on the basis of display information items provided respectively for graphic elements including polygonal graphic elements, and comprises: a sorting unit operable to rearrange the display information items provided respectively for the graphic elements on the basis of a first rule in order to display an even field, and rearrange the display information items provided respectively for the graphic elements on the basis of a second rule in order to display an odd field; and a drawing unit operable to sequentially read, when the odd field is displayed, the display information items rearranged by said sorting unit for displaying the odd field and perform the drawing process of the graphic elements on the basis of the display information items corresponding thereto, and sequentially read, when the even field is displayed, the display information items rearranged by said sorting unit for displaying the even field and perform the drawing process of the graphic elements on the basis of the display information items corresponding thereto, wherein the first rule is such that, when the display information items provided respectively for the graphic elements are rearranged in order that coordinates contained in the display information items and indicative of the positions of the graphic elements in the direction normal to the line are arranged in either descending order or ascending order, if the coordinates of the graphic elements correspond to an odd line to be scanned and the even line followed by the odd line, the display information items are arranged in either descending order or ascending order of the depth values indicated by the display depth information items which are contained in the display information items on the assumption that the coordinates of the graphic elements are equal, and wherein the second rule is such that, when the display information items provided respectively for the graphic elements are rearranged in order that the coordinates contained in the display information items are arranged in either descending order or ascending order, if the coordinates of the graphic elements correspond to an even line to be scanned and the odd line followed by the even line, the display information items are arranged in either descending order or ascending order of the depth values indicated by the display depth information items which are contained in the display information items on the assumption that the coordinates of the graphic elements are equal.

In accordance with this configuration, there are the following effects and advantages in addition to the same effects and advantages as in the invention of the first aspect. In the case where the screen image is displayed by interlaced scanning, a display information item whose display coordinate (the coordinate indicative of the position of the graphic element in the direction normal to the line) corresponds to the line which is skipped by the interlaced scanning and a display information item whose display coordinate corresponds to the line to be drawn are read together during the process of drawing the line to be displayed. Accordingly, even in the case of interlaced scanning, by regarding the display coordinates of these display information items to be equal and performing the sort operation in the order of the display depth values, it is guaranteed that the drawing process is performed in the order of the display depth values. The advantages of the arrangement in ascending or descending order of the display depth values are the same as described above.

As a result, even in the case of interlaced scanning by the use of a buffer (the first buffer) of a small storage capacity for drawing, it is possible to realize the display of high quality three-dimensional images.

In the above drawing apparatus, said drawing unit includes: a first buffer capable of storing pixel information corresponding to a first predetermined number of pixels of the pixels forming the screen, and operable to output the pixel information as stored for the purpose of displaying the screen image, and store new pixel information for displaying the screen image in the location used for storing the pixel information as output; a second buffer capable of storing the display information items corresponding to a second predetermined number of the graphic elements, and operable to store the display information items in the order that they are transferred for reuse when the display information items can be reused for the purpose of storing other pixel information on the basis of the display information items in said first buffer after the pixel information on the basis of the display information items are stored in said first buffer, and output the display information items in the order as stored if it arrives when the new pixel information is stored in said first buffer; a comparing unit operable when the odd field is displayed to compare display depth information item contained in, among the display information items which are read in the order as rearranged by said sorting unit for displaying the odd field, the display information item for generating the new pixel information if it arrives when the new pixel information is stored in said first buffer and display depth information item contained in the display information item as output from said second buffer, and select and output first either of the display information items on the basis of a predetermined rule, and operable when the even field is displayed to compare display depth information item contained in, among the display information items which are read in the order as rearranged by said sorting unit for displaying the even field, the display information item for generating the new pixel information if it arrives when the new pixel information is stored in said first buffer and display depth information item contained in the display information item as output from said second buffer, and select and output first either of the display information items on the basis of the predetermined rule, and a writing unit operable to generate the pixel information on the basis of the display information item as output from said comparing unit and write the pixel information as generated to said first buffer as the new pixel information.

In accordance with this configuration, there are the second buffer and the comparing unit which are the same as those added to the invention in accordance with the first aspect. Because of this, there are the same effects and advantages as in the invention.

In the above drawing apparatus, when a plurality of the graphic elements respectively include pixels to be displayed on the top line of the screen, said sorting unit does not apply the first rule and the second rule, and arranges the display information items corresponding to the plurality of these graphic elements in either ascending order or descending order of the depth values.

In accordance with this configuration, there is the same rule of rearrangement, when a plurality of the graphic elements respectively include pixels to be displayed on the top line of the screen, as introduced in the invention in accordance with the first aspect. Because of this, there are the same effects and advantages as in the invention.

In the above drawing apparatus, each time the rearrangement of display information items provided respectively for a predetermined number (preferably, one) of the graphic elements is completed, said sorting unit notifies the completion to said drawing unit, wherein the rearrangement required for displaying the odd field is started just after entering the vertical blanking period which is inserted just before displaying the odd field, and wherein the rearrangement required for displaying the even field is started just after entering the vertical blanking period which is inserted just before displaying the even field.

Since it is notified on a case-by-case basis that a sort result is fixed, the drawing process can be performed without waiting for the completion of the sort operation. And, in accordance with this configuration, since the sort operation is started just after entering the vertical blanking period, it is possible to secure a sufficient time in which the arithmetic operation before the sort operation can be performed with time to spare.

The novel features of the invention are set forth in the appended claims. The invention itself, however, as well as other features and advantages thereof, will be best understood by reading the detailed description of specific embodiments in conjunction with the accompanying drawings, wherein:

Brief Description of Drawings

Fig. 1 (a) is a view for showing an example of a screen SCR in which polygons #0 to #7 are displayed for the purpose of explaining the sort rule 1 performed by the YSU 19 in accordance with an embodiment of the present invention. Fig. 1(b) is a view for showing an example of the sort operation in accordance with the sort rule 1.

Fig. 2(a) is a view for showing an example of the screen SCR in which the polygons #0 to #7 are displayed for the purpose of explaining the sort rule 2 performed by the YSU 19. Fig. 2(b) is a view for showing an example of the sort operation in accordance with the sort rule 2.

Fig. 3 (a) is a view for showing an example of a screen SCR in which polygons #0 to #7 are displayed for the purpose of explaining the sort rule 3 performed by the YSU 19. Fig. 3(b) is a view for showing an example of the sort operation in accordance with the sort rule 3.

Fig. 4 is an explanatory view for showing the first stage of the RPU 19 in accordance with the embodiment of the present invention.

Fig. 5(a) is a view for showing an example of polygons which are displayed in the screen SCR for the purpose of explaining the operations of the prefetch buffer 108, recycle buffer 110 and depth comparator 112 of the RPU 9. Fig. 5(b) is a view for showing an example of the result of the sort operation by the YSU 19 as the preprocessing of the drawing process by the RPU 9.

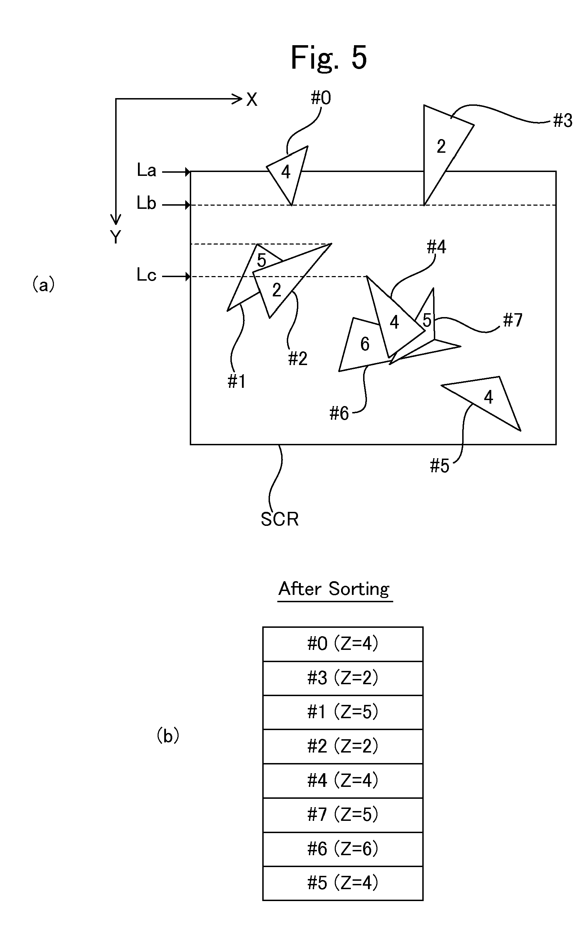

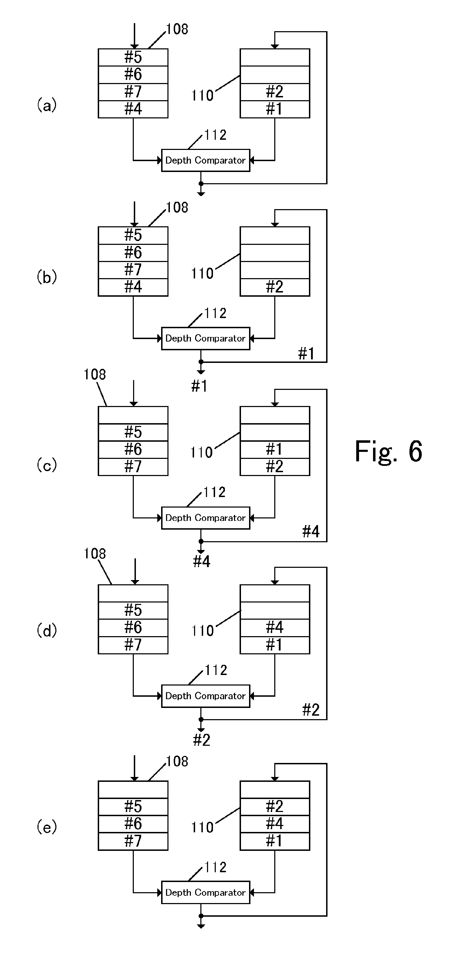

Fig. 6(a) is a schematic diagram for showing the content arrangement of the prefetch buffer 108 and the content arrangement of the recycle buffer 110 just after completing the drawing process for displaying the line followed by the line Lc of Fig. 5 (a). Fig. 6 (b) is a schematic diagram for showing the flow of polygon structure instances when drawing the pixels corresponding to the line Lc and contained in the polygons #1, #2 and #4. Fig. 6(c) is a schematic diagram for showing the flow of polygon structure instances when drawing the pixels corresponding to the line Lc and contained in the polygons #1, #2 and #4. Fig. 6(d) is a schematic diagram for showing the flow of polygon structure instances when drawing the pixels corresponding to the line Lc and contained in the polygons #1, #2 and #4. Fig. 6(e) is a schematic diagram for showing the content arrangement of the prefetch buffer 108 and the content arrangement of the recycle buffer 110 just after completing the drawing process for displaying the line Lc.

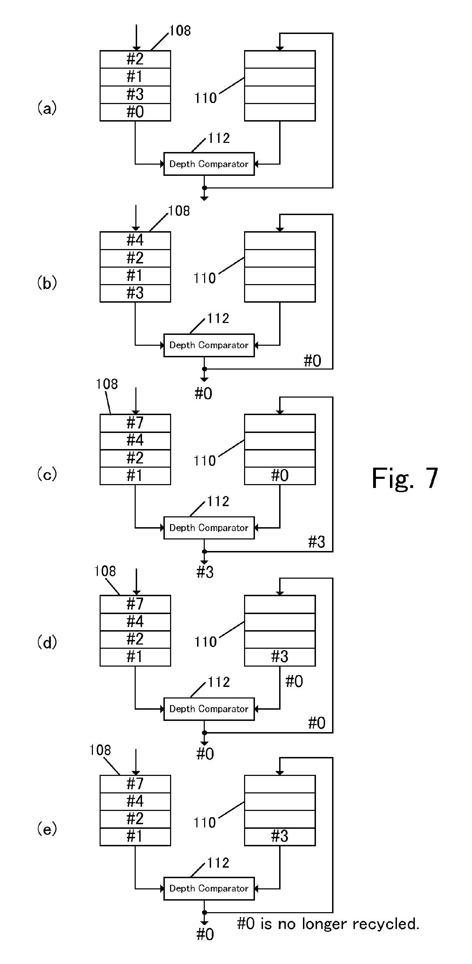

Fig. 7(a) is a schematic diagram for showing the content arrangement of the prefetch buffer 108 in which the polygon structure instances #0, #3, #1 and #2 of Fig. 5(b) are stored. Fig. 7(b) is a schematic diagrams for showing the flow of polygon structure instances when drawing the pixels corresponding to the line La and contained in the polygons #0 and #3 of Fig. 5(a). Fig. 7(c) is a schematic diagrams for showing the flow of polygon structure instances when drawing the pixels corresponding to the line La and contained in the polygons #0 and #3 of Fig. 5(a); Fig. 7(d) is a schematic diagram for showing the flow of polygon structure instances when drawing the polygons #0 and #3 before reaching the final display line Lb thereof. Fig. 7(e) is a schematic diagram for showing the flow of polygon structure instances when drawing the polygons #0 and #3 on the final display line Lb thereof.

Fig. 8 is an explanatory view for showing the sort rule 4 of the YSU 19 in the case where interlaced scanning is used for display operations.

Fig. 9(a) is an explanatory view for showing a sort operation when a display operation is performed in accordance with interlaced scanning in the timing of the mode 1. Fig. 9(b) is an explanatory view for showing a sort operation when a display operation is performed in accordance with interlaced scanning in the timing of the mode 2.

Fig. 10 is a block diagram showing the internal structure of a multimedia processor 1 in accordance with the embodiment of the present invention.

Fig. 11 is a flow chart for showing the outline of the graphics process by the multimedia processor 1 of Fig. 10.

Fig. 12 is a block diagram showing the internal configuration of the RPU 9 of Fig. 10.

Fig. 13 is a view for showing the configuration of the polygon structure in the texture mapping mode.

Fig. 14 is a view for showing the configuration of the texture attribute structure.

Fig. 15 is a view for showing the configuration of the polygon structure in the gouraud shading mode.

Fig. 16 (a) is a view for showing the configuration of the sprite structure when scissoring is disabled. Fig. 16(b) is a view for showing the configuration of the sprite structure when scissoring is enabled.

Fig. 17 is an explanatory view for showing the process of a polygon by the slicer 118 in the gouraud shading mode.

Fig. 18 is an explanatory view for showing the process of a polygon by the slicer 118 in the texture mapping mode.

Fig. 19 is an explanatory view for showing the process of a sprite by the slicer 118.

Fig. 20 is an explanatory view for showing the dithering process by the pixel dither 122.

Fig. 21 is an explanatory view for showing the bi-liner filtering by means of the bi-liner filter 130.

Fig. 22 is a view for showing a heap structure of the array "A" which is built after completing the Y sort operation by the YSU 19 of Fig. 10.

Fig. 23 is an explanatory view for showing the method of storing the heap structure of Fig. 22 in the main RAM 25.

Fig. 24 is a flow chart for showing an exemplary overall sequence of the Y sort operation of the polygon structure array by the YSU 19 of Fig. 10.

Fig. 25 is a flow chart for showing an exemplary sequence of the heap building process in step S21 of Fig. 24.

Fig. 26 is a flow chart for showing an exemplary sequence of the down heap process.

Fig. 27 is a flow chart showing an exemplary sequence of the rank comparison process.

Best Mode for Carrying Out the Invention

In what follows, several embodiments of the present invention will be explained in conjunction with the accompanying drawings. Meanwhile, like references indicate the same or functionally similar elements throughout the respective drawings, and therefore redundant explanation is not repeated. In the following equations, the symbol "*" stands for multiplication.

First of all, the basic mechanism of the drawing process for displaying three-dimensional images in accordance with an embodiment of the present invention will be explained. In the case of the present embodiment, a sort operation (which is sometimes referred to also as the "Y sort") is performed as the preprocessing of the drawing process by a Y sorting unit 19 to be described below (referred to as the "YSU" in the following description). Target items of the sort operation are the respective elements of a structure array. There are provided structure arrays in a main RAM (random access memory) 25 to be described below, i.e., a structure array (referred to as the "polygon structure array") of polygons each of which is a polygonal graphic element for representing a shape of each face of a three-dimensional object as projected on a two-dimensional space, and a structure array (referred to as the "sprite structure array") of sprites which are rectangular graphic elements respectively in parallel with the screen. Each element of the polygon structure array is a "polygon structure instance", and each element of the sprite structure array is a "sprite structure instance". Nevertheless, they are generally referred to simply as the "structure instance" in the case where they need not be distinguished.

The respective polygon structure instances stored in the polygon structure array are associated with polygons in a one-to-one correspondence, and each polygon structure instance consists of the display information of the corresponding polygon (containing the vertex coordinates in the screen, information about the texture pattern to be used in a texture mapping mode, and the color data (RGB color components) to be used in a gouraud shading mode). The respective sprite structure instances stored in the sprite structure array are associated with sprites in a one-to-one correspondence, and each sprite structure instance consists of the display information of the corresponding sprite (containing the coordinates in the screen, and information about the texture pattern to be used). This will be explained in detail later.

In what follows, sort rules 1, 2 and 3 to be performed by the YSU 19 will be explained, but the coordinate systems to be used will be explained in advance. The two-dimensional coordinate system which is used for actually displaying an image on a display device (not shown in the figure) is referred to as the screen coordinate system. In the case of the present embodiment, the screen coordinate system is represented by a two-dimensional pixel array of horizontal 2048 pixels x vertical 1024 pixels. While the origin of the coordinate system is located at the upper left corner, the positive X-axis is extending in the horizontal rightward direction, and the positive Y-axis is extending in the vertical downward direction. However, the area which is actually displayed is not the entire space of the screen coordinate system but is part thereof. This display area is referred to as the screen.

Fig. 1 (a) is a view for showing an example of a screen SCR in which polygons #0 to #7 are displayed for the purpose of explaining the sort rule 1 performed by the YSU 19. Fig. 1(b) is a view for showing an example of the sort operation in accordance with the sort rule 1. As shown in Fig. 1(b), polygon structure instances #0 to #7 are stored in a polygon structure array PS in correspondence with the polygons #0 to #7 of Fig. 1(a). Incidentally, each polygon and the corresponding polygon structure instance are given the same reference numeral.

The YSU 19 rearranges the respective polygon structure instances #0 to #7 in ascending order of the Y-coordinate. In this case, the Y-coordinate of each polygon used for the sort operation is the smallest one of the Y-coordinates of the three vertices of the polygon (referred to as the "minimum Y-coordinate" in the following description).

As a result of this sort operation, the respective polygon structure instances #0 to #7 are sorted in ascending order of the minimum Y-coordinates as illustrated in the right hand side of Fig. 1(b).

The rule in which the respective polygon structure instances are sorted in ascending order of the minimum Y-coordinates as described above is termed as the sort rule 1.

However, there can be a plurality of polygons having the same minimum Y-coordinate. In such a case, the sort rule 2 is applied thereto.

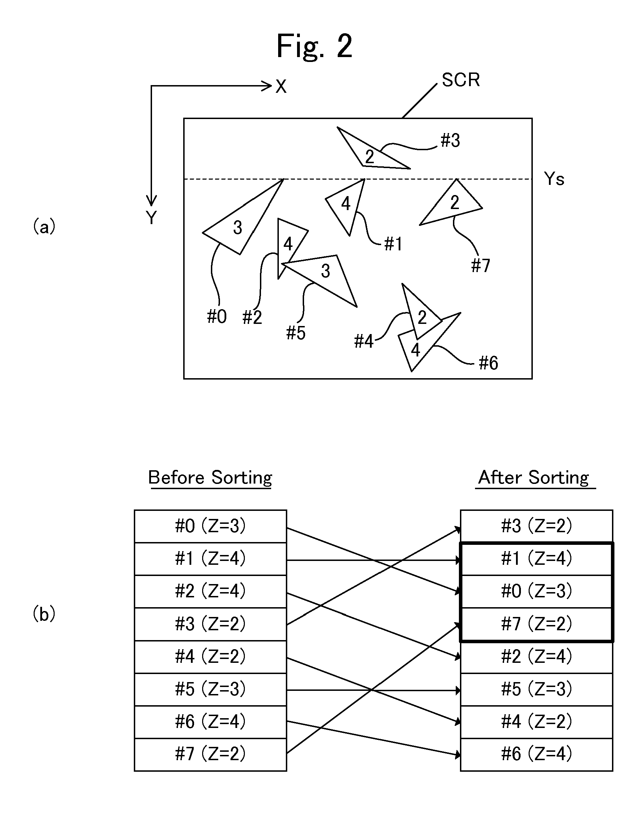

Fig. 2(a) is a view for showing an example of the screen SCR in which the polygons #0 to #7 are displayed for the purpose of explaining the sort rule 2 performed by the YSU 19. Fig. 2(b) is a view for showing an example of the sort operation in accordance with the sort rule 2. As shown in Fig. 2(a), the polygons #0, #1 and #7 have the same minimum Y-coordinate "Ys" in the screen SCR. In this case, the YSU 19 rearranges the respective polygon structure instances #0, #1 and #7 in descending order of the depth values included in the respective polygon structure instances #0, #1 and #7.

As a result of this sort operation, the polygon structure instances #0, #1 and #7 are sorted in descending order of the depth values as illustrated in the right hand side of Fig. 2(b).

The depth value (which may be referred to also as "display depth information") is information indicative of which pixel is first drawn when pixels to be drawn overlap each other, and the drawing process is performed earlier (in a deeper position) as this value is larger while the drawing process is performed later (in a more front position) as this value is smaller. In other words, a larger depth value indicates that the pixel is displayed in a deeper position of the screen SCR, and a smaller depth value indicates that the pixel is displayed in a more front position.

As discussed above, the sort rule 2 is such that when there are polygons having the same minimum Y-coordinate, the respective polygon structure instances are sorted in descending order of the depth values.

However, with regard to a plurality of polygons which include pixels at the top line of the screen SCR but have different minimum Y-coordinates from each other, the YSU 19 rearranges the respective polygon structure instances in accordance with the sort rule 2 on the assumption that they have the same Y-coordinate. In other words, in the case where there is a plurality of polygons which includes pixels at the top line of the screen SCR, these polygon structure instances are sorted in descending order of the depth values on the assumption that they have the same Y-coordinate (i.e., irrespective of the values of their minimum Y-coordinates). This rule is referred to as the sort rule 3.

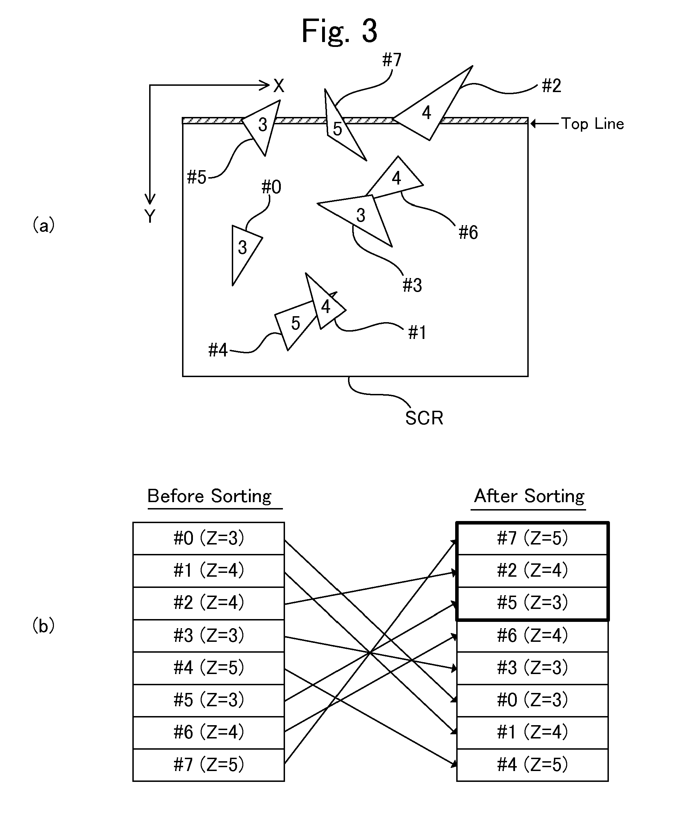

Fig. 3 (a) is a view for showing an example of a screen SCR in which polygons #0 to #7 are displayed for the purpose of explaining the sort rule 3 performed by the YSU 19. Fig. 3(b) is a view for showing an example of the sort operation in accordance with the sort rule 3. As shown in Fig. 3(a), the polygons #2, #5 and #7 have pixels displayed on the top line of the screen SCR respectively, and the minimum Y-coordinates thereof differ from each other. In this case, the YSU 19 rearranges the respective polygon structure instances #2, #5 and #7 in descending order of the depth values included in the respective polygon structure instances #2, #5 and #7 on the assumption that the polygons #2, #5 and #7 have the same minimum Y-coordinate.

As a result of this sort operation, the polygons #2, #5 and #7 are sorted in descending order of the depth values as illustrated in the right hand side of Fig. 3(b).

As has been discussed above, the sort rule 3 is such that a plurality of polygons having pixels displayed on the top line respectively is sorted in descending order of the depth values in accordance with the sort rule 2 rather than the sort rule 1, even if the minimum Y-coordinates differ from each other, on the assumption that the minimum Y-coordinates are the same.

The above sort rules 1 to 3 are applied also to the sort operation when the respective sprite structure instances of the sprite structure array are sorted. In this case, the minimum Y-coordinate of a sprite is the minimum Y-coordinate among the Y-coordinates of the four vertices of the sprite.

As will hereinafter be described in detail, the size of the polygon structure is 128 bits, and the size of the sprite structure is 64 bits. Namely, the size of the structure differs between polygons and sprites, and thereby the sort operation of structure instances is performed separately for the polygon structure array and the sprite structure array.

Next, the advantages of the sort operation in accordance with the sort rule 1 will be explained. For comparison, an assumption is taken that, every time one line is drawn, the drawing process is performed by searching all the polygon structure instances and all the sprite structure instances for the polygon structure instance and the sprite structure instance which are to be drawn on the line. In this comparative example, since the operation of searching all the polygon structure instances and all the sprite structure instances is required every time one line is drawn to make it difficult to perform high speed processing, the process of displaying many polygons and many sprites can sometimes not be completed, and thereby it may be impossible to sufficiently display three-dimensional images.

In this regard, if the respective polygon structure instances and the respective sprite structure instances are sorted in ascending order of the minimum Y-coordinates as in the present embodiment, the drawing process can be performed by simply reading the respective polygon structure instances and the respective sprite structure instances in the order as they are arranged after the sort operation. At this time, when a structure instance having the minimum Y-coordinate which is larger than the Y-coordinate of the drawing target position is read from the sorted structure array, the drawing process of the line can be halted, and thereby the process of searching the unnecessary structure instances may not be performed at all. As a result, the search operation of the comparative example is no longer required, and thereby it is possible to increase the process speed, display many polygons and many sprites, and sufficiently display three-dimensional images.

However, in the case of the present embodiment, since the drawing process in a buffer for storing pixels is performed for each horizontal line, it is necessary to sequentially read, for each horizontal line, the structure instances of the polygons and sprites that include pixels to be drawn on this each horizontal line.

Then, as described hereinbelow, in the case of the present embodiment, there are provided a function of reusing the structure instances of the polygons and sprites extending over a plurality of lines in order to avoid repeatedly reading each instance from a memory every time it is needed, a function of determining the order of drawing a structure instance which is read anew from the memory and a structure instance which is stored in the buffer for reusing, and a function of discarding a structure instance whose pixels have been completely drawn without saving it in the buffer for reusing.

When a plurality of graphic elements (polygons and sprites) are drawn on the top line of the display or when a plurality of graphic elements having the same minimum Y-coordinate are drawn on the same line, the sort rules 2 and 3 are applied, as described above, for the purpose of ensuring that the drawing process is performed always from the element having a larger depth value on each line. Since the present embodiment is provided with the mechanism to compare the depth value of the structure instance which is read from the sorted structure array and the depth value of the structure instance which is read from the buffer for reusing, and draw first the structure instance having a larger depth value, it is possible to ensure that all the structure instances are drawn in order from the instance having a larger depth value by employing the sort rules 2 and 3.

As discussed above, the drawing process is performed on each line from the graphic element having a larger depth value and to be displayed in a deeper position for the purpose of realizing a translucent composition mechanism. If an opaque graphic element to be drawn in a deeper position is drawn after drawing a translucent graphic element to be drawn in a more front position, it is impossible to correctly perform the drawing process in a location where these elements overlap each other in a see-through manner. Because of this, the drawing process is performed on each line from the graphic element having a larger depth value and to be displayed in a deeper position.

Meanwhile, the respective structure instances as sorted by the YSU 19 are read from a main RAM 25 to a rendering processing unit 9 (refer to as the "RPU" in the following description) for use in the drawing process. The first stage of this drawing process will be explained. Meanwhile, in the case of the present embodiment, the operation of writing data to a line buffer LB1 or LB2 to be described below is called drawing. The respective line buffers LB1 and LB2 serve to store the data of pixels to be located on one line of the screen.

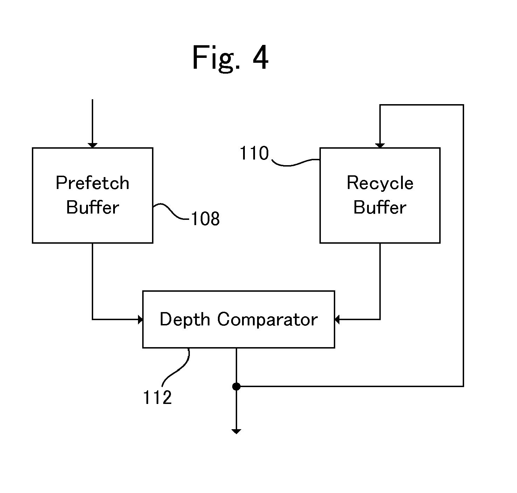

Fig. 4 is an explanatory view for showing the first stage of the RPU 19 in accordance with the embodiment of the present invention. As shown in Fig. 4, the RPU 19 is provided with a prefetch buffer 108, a recycle buffer 110 and a depth comparator 112 in the first stage.

The prefetch buffer 108 is a buffer of an FIFO (first-in-first-out) structure used to store the sorted structure instances, which are successively read from the main RAM 25 and successively outputs in the same order as they are read. In other words, the structure instances are stored in the prefetch buffer 108 in the same order as sorted by the YSU 19. Then, the structure instances as stored are output in the same order as they are stored in the drawing cycle for displaying the corresponding polygons or sprites. The prefetch buffer 108 is provided as a buffering mechanism for buffering the timing of inputting data from the main RAM 25 and the timing of outputting data to the depth comparator 112. This is because the RPU 19 shares the main RAM 25 with other function units, and thereby a waiting time may occur when data is read from the main RAM 25.

The recycle buffer 110 is a buffer of an FIFO structure for storing structure instances which can be used again in the next drawing cycle (i.e., can be reused). Accordingly, the structure instances stored in the recycle buffer 110 are used also in the next drawing cycle. One drawing cycle corresponds to the drawing period for displaying one line. In other words, one drawing cycle corresponds to the drawing period for drawing, on either the line buffer LB1 or LB2, all the data required for displaying one line corresponding to the line buffer.

The depth comparator 112 compares the depth value included in the structure instance extracted from the prefetch buffer 108 and the depth value included in the structure instance extracted from the recycle buffer 110, selects the structure instance having a larger depth value (that is, to be displayed in a deeper position), and outputs it to the subsequent stage.

In this case, in the case where the structure instance as selected is used in the next drawing cycle (that is, used for drawing the next line), this structure instance is output to the subsequent stage and also output and written to the recycle buffer 110. However, in the case where the structure instance as selected is not used in the next drawing cycle (that is, not used for drawing the next line), this structure instance is output to the subsequent stage but is not written to the recycle buffer 110.

Accordingly, the recycle buffer 110 stores only the structure instances which are used for drawing the current line and also used for drawing the next line in descending order of the depth values. The following is an explanation in conjunction with specific examples.

Fig. 5 (a) is a view for showing an example of polygons which are displayed in the screen SCR for the purpose of explaining the operations of the prefetch buffer 108, recycle buffer 110 and depth comparator 112 of the RPU 9. Fig. 5(b) is a view for showing an example of the result of the sort operation by the YSU 19 as the preprocessing of the drawing process by the RPU 9.

Fig. 6(a) is a schematic diagram for showing the content arrangement of the prefetch buffer 108 and the content arrangement of the recycle buffer 110 just after completing the drawing process for displaying the line followed by the line Lc of Fig. 5 (a) ; Fig. 6 (b) to Fig. 6 (d) are schematic diagrams for showing the flow of polygon structure instances when drawing the pixels corresponding to the line Lc and contained in the polygons #1, #2 and #4; and Fig. 6(e) is a schematic diagram for showing the contents of the prefetch buffer 108 and the content arrangement of the recycle buffer 110 just after completing the drawing process for displaying the line Lc.

As shown in Fig. 6(a), just after completing the drawing process for displaying the line followed by the line Lc of Fig. 5(a), the polygon structure instances #4, #7 and #6 and #5 are stored in the prefetch buffer 108 in the order after sorting as shown in Fig. 5(b), and the polygon structure instances #1 and #2 are stored in the recycle buffer 110 in descending order of the depth values. Meanwhile, since the polygon structure instances #0 and #3 are not displayed on the line Lc, they are not stored in the recycle buffer 110.

Then, as shown in Fig. 6(b), the depth comparator 112 compares the depth value of the polygon structure instance #4 which is the first entry of the prefetch buffer 108 and the depth value of the polygon structure instance #1 which is the first entry of the recycle buffer 110, selects the polygon structure instance #1 having a larger depth value, outputs the polygon structure instance #1 to the subsequent stage, and transmits the polygon structure instance #1 to the recycle buffer 110. This is because the polygon #1 is displayed again on the next line and thereby used also in the next drawing cycle. In this case, since the polygon structure instance #4 is not selected by the depth comparator 112, the read pointer of the prefetch buffer 108 does not proceed to the next instance and remains pointing to the polygon structure instance #4.

Next, as shown in Fig. 6(c), the depth comparator 112 compares the depth value contained in the polygon structure instance #4 which is the first entry of the prefetch buffer 108 and the depth value contained in the polygon structure instance #2 which is the first entry of the recycle buffer 110, selects the polygon structure instance #4 having a larger depth value, outputs the polygon structure instance #4 to the subsequent stage, and transmits the polygon structure instance #4 to the recycle buffer 110. This is because the polygon #4 is displayed again on the next line and thereby used also in the next drawing cycle. In this case, since the polygon structure instance #2 is not selected by the depth comparator 112, the read pointer of the recycle buffer 110 does not proceed to the next instance and remains pointing to the polygon structure instance #2.

Then, as shown in Fig. 6(d), the depth comparator 112 reads the polygon structure instance #2 which is the first entry of the recycle buffer 110, outputs the polygon structure instance #2 to the subsequent stage, and transmits the polygon structure instance #2 to the recycle buffer 110. This is because the polygon #2 is displayed again on the next line and thereby used also in the next drawing cycle.

As a result of the above process, just after completing the drawing process for displaying the line Lc, the polygon structure instances #1, #4 and #2 to be used for drawing the next line are stored in the recycle buffer 110 in descending order of the depth values. Meanwhile, since the polygon #7 is not displayed in the line Lc, the polygon structure instance #7 is not read from the prefetch buffer 108 as shown in Fig. 6(e).

Fig. 7(a) is a schematic diagram for showing the content arrangement of the prefetch buffer 108 in which the polygon structure instances #0, #3, #1 and #2 of Fig. 5(b) are stored; Fig. 7(b) and Fig. 7(c) are schematic diagrams for showing the flow of polygon structure instances when drawing the pixels corresponding to the line La and contained in the polygons #0 and #3 of Fig. 5(a); Fig. 7(d) is a schematic diagram for showing the flow of polygon structure instances when drawing the polygons #0 and #3 before reaching the final display line Lb thereof; and Fig. 7(e) is a schematic diagram for showing the flow of polygon structure instances when drawing the polygons #0 and #3 on the final display line Lb thereof.

As shown in Fig. 7(a), in advance of the drawing process for displaying the top line La of Fig. 5(a), the sorted polygon structure instances shown in Fig. 5(b) is stored in the prefetch buffer 108 in the same order.

Then, as shown in Fig. 7(b), the polygon structure instance #0 as the first entry of the prefetch buffer 108 is read by the depth comparator 112, which outputs this polygon structure instance #0 to the subsequent stage, and the polygon structure instance #0 is transmitted to and stored in the recycle buffer 110. This is because the polygon #0 is displayed again on the next line and thereby used also in the next drawing cycle. Meanwhile, the polygon structure instance #4 read from the main RAM 25 is written to the prefetch buffer 108.

Next, as shown in Fig. 7(c), the polygon structure instance #3 as the first entry of the prefetch buffer 108 is read by the depth comparator 112, and output to the subsequent stage, and the polygon structure instance #3 is transmitted to and stored in the recycle buffer 110. This is because the polygon #3 is displayed again on the next line and thereby used also in the next drawing cycle. Meanwhile, the polygon structure instance #7 read from the main RAM 25 is written to the prefetch buffer 108.

When completing the drawing process for displaying on the top line La, the depth comparator 112 reads the polygon structure instance #0 from the recycle buffer 110 as shown in Fig. 7(d) and outputs this polygon structure instance #0 to the subsequent stage in order to draw the next line for display, and the polygon structure instance #0 is transmitted to and stored in the recycle buffer 110. This is because the polygon #0 is successively displayed on the next line and used also in the next drawing cycle. Thereafter, the depth comparator 112 reads the polygon structure instance #3 from the recycle buffer 110, and outputs the polygon structure instance #3 to the subsequent stage, and the polygon structure instance #3 is transmitted to and stored in the recycle buffer 110. This is because the polygon #3 is successively displayed on the next line and used also in the next drawing cycle. The process as described above is repeated until the polygon #0 and #3 are completely drawn. Meanwhile, the polygon #1 is not yet displayed, and thereby not read from the prefetch buffer 108.

Then, as shown in Fig. 7(e), in the drawing process for displaying the polygon #0 and #3 on the line Lb, the depth comparator 112 reads the polygon structure instance #0 from the recycle buffer 110 and outputs this polygon structure instance #0 to the subsequent stage, but the polygon structure instance #0 is not transmitted to the recycle buffer 110. This is because the polygon #0 is not displayed on the next line and thereby no longer required. Thereafter, the depth comparator 112 reads the polygon structure instance #3 from the recycle buffer 110 and outputs this polygon structure instance #3 to the subsequent stage, but the polygon structure instance #3 is not transmitted to the recycle buffer 110. This is because the polygon #3 is not displayed on the next line and thereby no longer required.

In the case of the above example, since only the polygons are displayed on the screen SCR, all the structure instances read in the prefetch buffer 108 are polygon structure instances. However, as described below, since the sorted polygon structure instances and the sorted sprite structure instance are merge sorted in accordance with the sort rules 1 to 3, these structure instances as merge sorted are stored in the prefetch buffer 108. Accordingly, in the case where both polygons and sprites are displayed, the respective structure instances are stored in the prefetch buffer 108 in accordance with the sort rules 1 to 3, and the process as discussed above is performed.

As has been discussed above, there are provided the depth comparator 112 and the recycle buffer 110 in which structure instances for use in the next drawing cycle are stored in descending order of the depth values. By this configuration, although the YSU 19 performs the sort operation in accordance with the sort rule 1, the drawing process is performed on each line always from the graphic element (a polygon or a sprite) having a larger depth value.

Incidentally, the above sort rules 1 to 3 are not only applied to the case where the display operation is performed by non-interlaced scanning but also applied to the case where the display operation is performed by interlaced scanning. However, in the case where interlaced scanning is used, it is preferred to also use a sort rule 4 as described below in addition to the sort rules 1 to 3.

The above sort rules 1 to 3 are applied also in the case of interlaced scanning. However, the sort operation for displaying an odd field is performed in accordance with the sort rule 2 on the assumption that the minimum Y-coordinate of the polygon which is displayed on an odd line and/or the minimum Y-coordinate of the polygon which is displayed on the even line followed by the odd line are equal. However, the above is not applicable to the top odd line. This is because there is no even line followed by the top odd line. On the other hand, the sort operation for displaying an even field is performed in accordance with the sort rule 2 on the assumption that the minimum Y-coordinate of the polygon which is displayed on an even line and/or the minimum Y-coordinate of the polygon which is displayed on the odd line followed by the even line are equal. This kind of the sort operation is referred to as the sort rule 4.

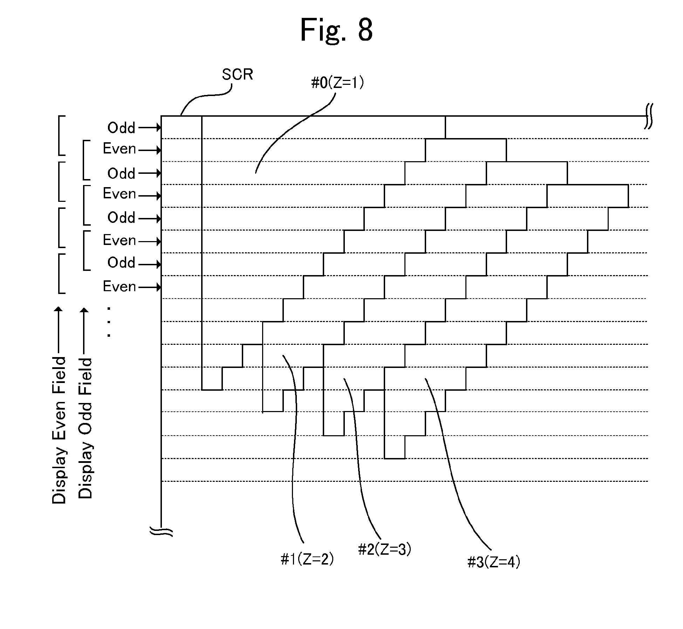

Fig. 8 is an explanatory view for showing the sort rule 4 of the YSU 19 in the case where interlaced scanning is used for display operations. First, the sort operation for displaying an odd field will be discussed on the assumption that the polygons #0 to #3 are displayed on the screen SCR as shown in Fig. 8. In the figure, the second odd line from the top is referred to.

In this case, in accordance with the sort rule 4, the polygon structure instance #1 is arranged after the polygon structure instance #2 in descending order of the depth values on the assumption that the minimum Y-coordinate of the polygon #2 which is displayed from the second odd line is equal to the minimum Y-coordinate of the polygon #1 which is displayed from the even line followed by the second odd line.

In the case of the example of Fig. 8, as the result of the sort operation in accordance with the sort rules 1 to 4, the polygon structure instances are sorted in the order as #0, #2, #1 and #3 for displaying the odd field. Incidentally, if only the sort rules 1 to 3 are applied, the polygon structure instances are sorted in the order as #0, #1, #2 and #3.

Next, the sort operation for displaying an even field will be discussed, and in the figure the top even line is referred to. In this case, in accordance with the sort rule 4, the polygon structure instance #0 is arranged after the polygon structure instance #1 in descending order of the depth values on the assumption that the minimum Y-coordinate of the polygon #1 which is displayed from the top even line is equal to the minimum Y-coordinate of the polygon #0 which is displayed from the odd line followed by the top even line.

In the case of the example of Fig. 8, as the result of the sort operation in accordance with the sort rules 1 to 4, the polygon structure instances are sorted in the order as #1, #0, #3 and #2 for displaying the even field. Incidentally, if only the sort rules 1 to 3 are applied, the polygon structure instances are sorted in the order as #0, #1, #2 and #3.

The above sort rule 4 is applied for sorting the respective sprite structure instances of the sprite structure array in addition to the sort rules 1 to 3.

Next is the explanation of the reason why the sort rule 4 is introduced for interlaced scanning. In Fig. 8, it is assumed that the sort operation is provided only in accordance with the sort rules 1 to 3. In this case, the polygon structure instances are sorted in ascending order of the minimum Y-coordinates as #0, #1, #2 and #3. Then, when the odd field is displayed, for example, the polygon structure instance #1 is stored as the first entry of the prefetch buffer 108, while the polygon structure instance #0 is stored as the first entry of the recycle buffer 110, just after completing the drawing process of the first odd line from the top in the figure. Accordingly, when drawing the second odd line from the top in the figure, the polygon #1, #2 and #0 is drawn in this order. As described above, this odd line is not drawn in descending order of the depth values.

By making use of the sort rule 4, when the odd field is displayed, the sort operation is performed in the order as the polygon structure instances #0, #2, #1 and #3. Then, in the case where an odd field is displayed, just after completing the drawing process for displaying the first odd line from the top, the polygon structure instance #2 is located at the output port of the prefetch buffer 108, and the polygon structure instance #0 is located at the output port of the recycle buffer 110. Accordingly, when drawing the second odd line from the top in the figure, the drawing process is performed in descending order of the depth values as #2, #1 and #0.

The above description is true when an even field is displayed.

Incidentally, when the sort operation is performed for displaying images in accordance with interlaced scanning, there is a timing difference between the sort operation for odd fields and the sort operation for even fields depending upon the timing of sorting. Then, in the case of the present embodiment, two sort modes, i.e., a mode 1 and a mode 2 are provided. These will be explained with reference to drawings.

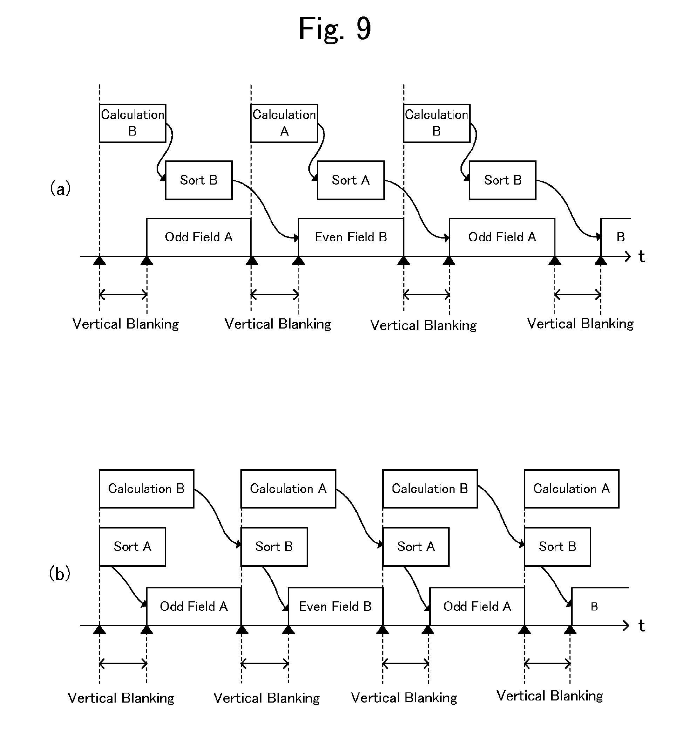

Fig. 9(a) is an explanatory view for showing a sort operation when a display operation is performed in accordance with interlaced scanning in the timing of the mode 1, and Fig. 9(b) is an explanatory view for showing a sort operation when a display operation is performed in accordance with interlaced scanning in the timing of the mode 2.

As shown in Fig. 9(a), in the mode 1, the YSU 19 performs a sort operation B for displaying an even field B during displaying an odd field A, which is to be displayed in advance of displaying the even field B. Accordingly, it is required to finish all the processes for the even field B, i.e., both calculation B of the values (values of the respective structure instances) to be assigned to the polygon structure array and the sprite structure array and the sort operation B during displaying the odd field A, which is to be displayed in advance of displaying the even field B. This is because the sort operation B is performed on the basis of the result of the calculation B.

In the same manner, in the mode 1, the YSU 19 performs a sort operation A for displaying an odd field A during displaying an even field B, which is to be displayed in advance of displaying the odd field A. Accordingly, it is required to finish all the processes for the odd field A, i.e., both calculation A of the values to be assigned to the polygon structure array and the sprite structure array, and the sort operation A during displaying the even field B, which is to be displayed in advance of displaying the odd field A. This is because the sort operation A is performed on the basis of the result of the calculation A.

On the other hand, in the mode 2, as shown in Fig. 9(b), the YSU 19 performs the sort operation A for displaying an odd field A during the previous vertical blanking period and during displaying the odd field A. The calculation A required of the odd field A is performed during displaying the even field B followed by the odd field A. In the same manner, in the mode 2, the YSU 19 performs the sort operation B for displaying an even field B during the previous vertical blanking period and during displaying the even field B. The calculation B required of the even field B is performed during displaying the odd field A followed by the even field B.

Accordingly, in the mode 2, the sort operation A required for the odd field A and the calculation B for the even field B can be performed in parallel while the odd field A is displayed, and the sort operation B required for the even field B and the calculation A for the odd field A can be performed in parallel while the even field B is displayed. As a result, it is possible to secure a sufficient time for the calculations A and B.

The present embodiment is provided with the function of reading, each time a structure instance is fixed one after another from the highest rank, the structure instance to the RPU 9 for performing the drawing process, without waiting for the completion of the sort operation of all the structure instances. More specifically speaking, each time a sorted polygon structure instance of the polygon structure array is fixed, the YSU 19 transmits a pulse signal PPL (to be described below) to the RPU 9 which counts the number of times of receiving the pulse signal PPL and reads polygon structure instances from the RAM 25 in order not to exceed the counter value. On the other hand, the similar function is provided also for sorting and reading the sprite structure array. Because of this, as in the mode 2, it is possible to perform the sort operation of the respective structure instances for the field, which is being displayed, during the previous vertical blanking period and during displaying the field.

In the case of the present embodiment, heap sort is used as an example of a sort algorithm which makes it possible to extract a structure instance one after another from the highest rank. Also, it is another advantage of the heap sort that a sorting performance is stabilized, i.e., there is a little variation in the time required for the sort operation.

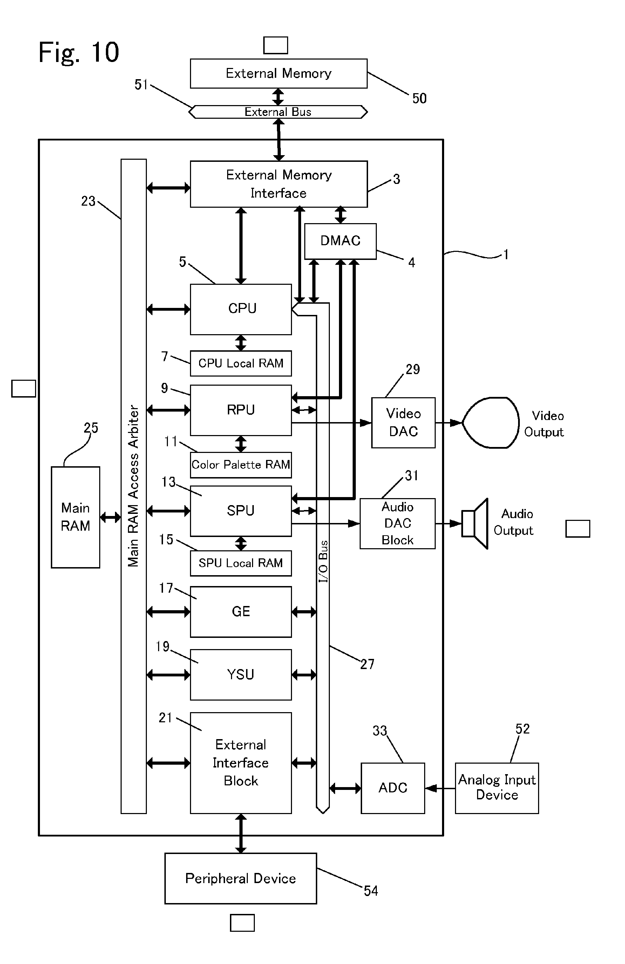

Fig. 10 is a block diagram showing the internal structure of a multimedia processor 1 in accordance with the embodiment of the present invention. As shown in Fig. 10, this multimedia processor comprises an external memory interface 3, a DMAC (direct memory access controller) 4, a central processing unit (referred to as the "CPU" in the following description) 5, a CPU local RAM 7, a rendering processing unit (referred to as the "RPU" in the following description) 9, a color palette RAM 11, a sound processing unit (referred to as the "SPU" in the following description) 13, a SPU local RAM 15, a geometry engine (referred to as the "GE" in the following description) 17, a Y sorting unit (referred to as the YSU in the following description) 19, an external interface block 21, a main RAM access arbiter 23, the main RAM 25, an I/O bus 27, a video DAC (digital to analog converter) 29, an audio DAC block 31 and an A/D converter (referred to as the "ADC" in the following description) 33. The main RAM 25 and the external memory 50 are generally referred to as the "memory MEM" in the case where they need not be distinguished.

The CPU 5 performs various operations and controls the overall system in accordance with a program stored in the memory MEM. Also, the CPU 5 can send a request, to the DMAC 4, for transferring a program and data and, alternatively, can fetch program codes directly from the external memory 50 and access data stored in the external memory 50 through the external memory interface 3 and the external bus 51 but without intervention of the DMAC 4.

The CPU 5 performs the process relating to graphics operations, which are performed by running a program stored in the memory MEM, such as the calculation of the parameters required for the expansion, reduction, rotation and/or parallel displacement of the respective objects and sprites and the calculation of eye coordinates (camera coordinates) and view vector. In this description, the term "object" is used to indicate a unit which is composed of one or more polygons and to which expansion, reduction, rotation and parallel displacement transformations are applied in an integral manner.

The I/O bus 27 is a bus for system control and used by the CPU 5 as a bus master for accessing the control registers of the respective function units (the external memory interface 3, the DMAC 4, the RPU 9, the SPU 13, the GE 17, the YSU 19, the external interface block 21 and the ADC 33) and the local RAMs 7, 11 and 15. In this way, these function units are controlled by the CPU 5 through the I/O bus 27.

The CPU local RAM 7 is a RAM dedicated to the CPU 5, and used to provide a stack area in which data is saved when a sub-routine call or an interrupt handler is invoked and provide a storage area of variables which is used only by the CPU 5.

The RPU 9 which is one of the characteristic features of the present invention serves to generate three-dimensional images composed of polygons and sprites on a real time base. More specifically speaking, the RPU 9 reads the respective structure instances of the polygon structure array and sprite structure array, which are sorted by the YSU 19, from the main RAM 25, and generates image for each horizontal line in synchronization with scanning the screen by performing the processes with the depth comparator 112 and the like as described above and a variety of processes to be described below. The image as generated is converted into a data stream indicative of a composite video signal wave, and output to the video DAC 29. Also, the RPU 9 is provided with the function of sending a DMA transfer request to the DMAC 4 for receiving the texture pattern data of polygons and sprites. The RPU 9 will be described later in detail.

The texture pattern data is two-dimensional pixel array data to be arranged on a polygon or a sprite, and each pixel data item is part of the information for designating an entry of the color palette RAM 11. As described above, in the case of the present embodiment, an indirect designating method is employed for designating colors. In what follows, the pixels of texture pattern data are generally referred to as "texels" in order to distinguish them from "pixels" which are used to represent picture elements of an image displayed on the screen. Accordingly, the texture pattern data is a collection of texel data items.

The video DAC 29 is a digital/analog conversion unit which is used to generate an analog video signal. The video DAC 29 converts a data stream which is input from the RPU 9 into an analog composite video signal, and outputs it to a television monitor and the like (not shown in the figure) through a video signal output terminal (not shown in the figure).

The color palette RAM 11 is used to provide a color palette of 512 colors, i.e., 512 entries in the case of the present embodiment. The RPU 9 converts the texture pattern data into color data (RGB color components) by referring to the color palette RAM 11 on the basis of a texel data item included in the texture pattern data as part of an index which points to an entry of the color palette.

The SPU 13 generates PCM (pulse code modulation) wave data (referred to simply as the "wave data" in the following description), amplitude data, and main volume data. More specifically speaking, the SPU 13 generates wave data for 64 channels at a maximum, and time division multiplexes the wave data, and in addition to this, generates envelope data for 64 channels at a maximum, multiplies the envelope data by channel volume data, and time division multiplexes the amplitude data. Then, the SPU 13 outputs the main volume data, the wave data which is time division multiplexed, and the amplitude data which is time division multiplexed to the audio DAC block 31. In addition, the SPU 13 is provided with the function of sending a DMA transfer request to the DMAC 4 for receiving the wave data and the envelope data.

The audio DAC block 31 converts the wave data, amplitude data, and main volume data as input from the SPU 13 into analog signals respectively, and analog multiplies the analog signals together to generate analog audio signals. These analog audio signals are output to audio input terminals (not shown in the figure) of a television monitor and the like through audio signal output terminals (not shown in the figure).

The SPU local RAM 15 stores parameters (for example, the storage addresses and pitch information of the wave data and envelope data) which are used when the SPU 13 performs wave playback and envelope generation.

The GE 17 performs geometry operations for displaying three-dimensional images. Specifically, the GE 17 executes arithmetic operations such as matrix multiplications, vector affine transformations, vector orthogonal transformations, perspective projection transformations, the calculations of vertex brightnesses / polygon brightnesses (vector inner products), and polygon back face culling processes (vector cross products).

The YSU 19 which is one of the characteristic features of the present invention serves to sort the respective structure instances of the polygon structure array and the respective structure instances of the sprite structure array, which are stored in the main RAM 25, in accordance with the sort rules 1 to 4. In this case, the polygon structure array and the sprite structure array are separately sorted.

The external memory interface 3 serves to read data from the external memory 50 and write data to the external memory 50, respectively through the external bus 51. In this case, the external memory interface 3 arbitrates external bus use request purposes (causes of requests for accessing the external bus 51) issued from the CPU 5 and the DMAC 4 in accordance with an EBI priority level table, which is not shown in the figure, in order to select one of the external bus use request purposes. Then, accessing the external bus 51 is permitted for the external bus use request purpose as selected. The EBI priority level table is a table for determining the priority levels of various kinds of external bus use request purposes issued from the CPU 5 and the external bus use request purpose issued from the DMAC 4.

The external bus use request purposes include the block transfer request issued from an IPL (initial program loader), which is not shown in the figure, the request for accessing data issued from the CPU 5, the request for fetching instructions issued from the CPU 5, and the request for DMA issued from the DMAC 4.

The DMAC 4 serves to perform DMA transfer between the main RAM 25 and the external memory 50 connected to the external bus 51. In this case, the DMAC 4 arbitrates DMA transfer request purposes (causes of requests for DMA transfer) issued from the CPU 5, the RPU 9 and the SPU 13 in accordance with a DMA priority level table, which is not shown in the figure, in order to select one of the DMA transfer request purposes. Then, a DMA transfer request is issued to the external memory interface 3. The DMA priority level table is a table for determining the priority levels of DMA transfer request purposes issued from the CPU 5, the RPU 9 and the SPU 13.

The DMA transfer request purposes issued from the SPU 13 includes (1) transferring wave data to a wave buffer and (2) transferring envelope data to an envelope buffer. The wave buffer and the envelope buffer are provided as storage areas which are defined in the main RAM 25 for temporarily storing wave data and envelope data. Meanwhile, the arbitration between the two DMA transfer request purposes issued from the SPU 13 is performed by hardware (not shown in the figure) within the SPU 13, but not performed by the DMAC 4.

The DMA transfer request purpose of the RPU 9 includes transferring the texture pattern data to a texture buffer. The texture buffer is provided as a storage area which is defined in the main RAM 25 for temporarily storing the texture pattern data.

The DMA transfer request purposes issued from the CPU 5 includes (1) transferring a page when a page miss occurs in a virtual memory management system, and (2) transferring data which is requested by an application program and the like. Meanwhile, in the case where a plurality of DMA transfer requests are issued in the CPU 5, the arbitration thereamong is performed by software which is run in the CPU 5 but not performed by the DMAC 4.

The DMAC 4 is provided with the function of decompressing data in accordance with the LZ77 algorithm, and is capable of DMA transferring data, which is compressed and stored in the external memory 50, while decompressing the data in response to the DMA transfer request from the CPU 5.

The external interface block 21 is an interface with a peripheral device 54 and includes a programmable digital input/output (I/O) port of 24 channels. The respective 24 channels of the I/O port are used to connect with one or a plurality of a mouse interface function of 4 channels, a light gun interface function of 4 channels, a general purpose timer/counter function of 2 channels, an asynchronous serial interface function of one channel, and a general purpose parallel/serial conversion port function of one channel.

The ADC 33 is connected to an analog input port of 4 channels and serves to convert an analog signal, which is input from an analog input device 52 through the analog input port, into a digital signal. For example, an analog signal such as a microphone voice signal is sampled and converted into digital data.

The main RAM access arbiter 23 arbitrates access requests issued from the function units (the CPU 5, the RPU 9, the GE 17, the YSU 19, the DMAC 4 and the external interface block 21 (general purpose parallel/serial conversion port)) for accessing the main RAM 25, and grants access permission to one of the function units.

The main RAM 25 is used by the CPU 5 as a work area, a variable storing area, a virtual memory management area and so forth. Furthermore, the main RAM 25 is also used as a storage area for storing data to be transferred to another function unit by the CPU 5, a storage area for storing data which is DMA transferred from the external memory 50 by the RPU 9 and SPU 13, and a storage area for storing input data and output data of the GE 17 and YSU 19.

The external bus 51 is a bus for accessing the external memory 50. The CPU 5 and the DMAC 4 access the external bus 51 through the external memory interface 3. The address bus of the external bus 51 consists of 30 bits, and is connectable with the external memory 50, whose capacity can be 1 Giga bytes (= 8 Giga bits) at a maximum. The data bus of the bus 51 consists of 16 bits, and is connectable with the external memory 50, whose data bus width is 8 bits or 16 bits. External memories having different data bus widths can be connected at the same time, and there is provided the capability of automatically switching the data bus width in accordance with the external memory to be accessed.

Next is a description of the outline of the graphics process by the multimedia processor 1.

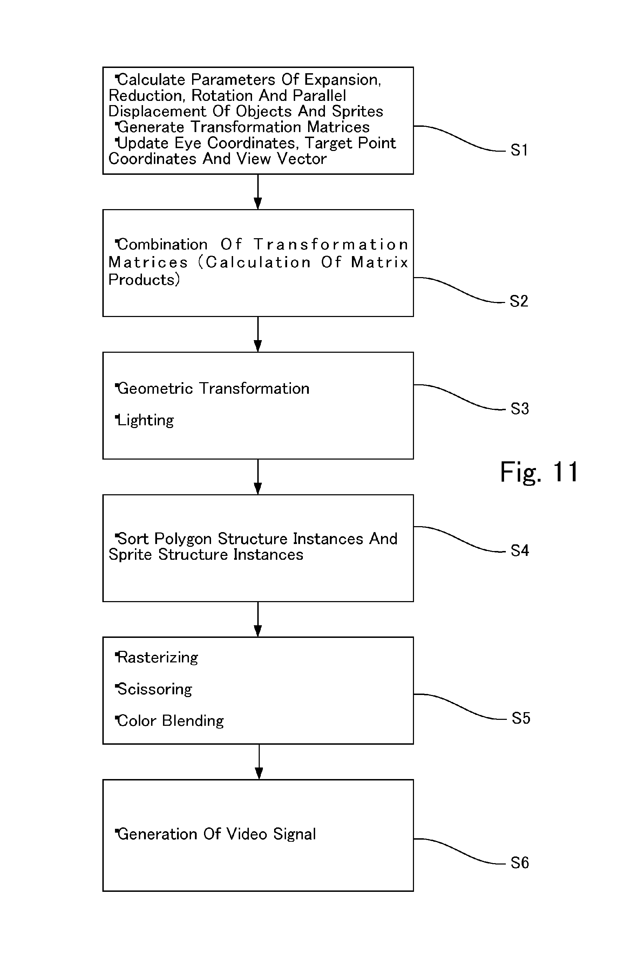

Fig. 11 is a flow chart for showing the outline of the graphics process by the multimedia processor 1 of Fig. 10. As shown in Fig. 11, in step S1, the CPU 5 calculates the parameters of the expansion, reduction, rotation and parallel displacement transformations of the respective sprites and objects (units each of which is composed of one or more polygons and to each of which expansion, reduction, rotation and parallel displacement transformations are applied in an integral manner). Transformation matrices are generated for the expansion, reduction, rotation and parallel displacement transformations of the respective sprites and objects on the basis of the parameters as calculated. These transformation matrices are used to perform the transformation from the coordinate systems locally used for the respective sprites and objects (the local coordinate systems) to the orthogonal coordinate system (the world coordinate system) in which all the sprites and all the objects are positioned in a unified manner.

In addition, the CPU 5 performs the operations of updating the eye coordinates (camera coordinates), the target point coordinates and the view vector. By the use of these parameters, the transformation matrices are generated for transforming coordinates from the world coordinate system to the orthogonal coordinate system (view coordinate system) centered at the viewpoint.

In step S2, if there are a plurality of transformation matrices for performing the expansion, reduction, rotation and parallel displacement transformations for one of the respective objects and sprites, the GE 17 combines such plural transformation matrices into a single transformation matrix by calculating the product of the matrices. Furthermore, the GE 17 calculates the products of the transformation matrices after combination and the transformation matrices for transforming the coordinate system, and composites the respective transformation matrices for transforming an object vertex coordinate array, an object normal vector array and sprite coordinates.

In step S3, the GE 17 performs the geometric transformation of the object vertex coordinate array, the object normal vector array and the sprite coordinates by the use of the transformation matrices as composited. In addition, the GE 17 calculates the inner product of each element of the object normal vector array as transformed and a light source vector to calculate the brightnesses of the vertices or surfaces (polygons) of the object. The results of the geometric transformation and lighting are assigned to the polygon structure array and the sprite structure array.

In step S4, the YSU 19 sorts the polygon structure instances and the sprite structure instances in accordance with the sort rules 1 to 4 in advance of performing the drawing process by the RPU 9.

In step S5, the RPU 9 reads the polygon structure instances and the sprite structure instances after the sort operation by the YSU 19, and generates a pixel data sequence for each horizontal display line while reading texture attribute structure instances indicative of the properties of the sprites and polygons used in the texture mapping mode. In addition to this, when generating the pixel data sequence of the sprites and polygons in the texture mapping mode, it is necessary to read the texture pattern data to be pasted thereon from the external memory 50. The process of generating pixel data sequence as described above is referred to as "rasterizing".

In the case of the present embodiment, the modes of drawing polygons as implemented include the texture mapping mode for drawing polygons by the use of texture mapping, and the gouraud shading mode for drawing polygons by the use of gouraud shading. The texture mapping is a drawing technique of arranging a texel pattern in the form of a two-dimensional lattice on a polygon surface. The gouraud shading is a type of smooth shading techniques used for representing a smooth curved surface which is simulated with a small number of polygons. In the gouraud shading, the drawing colors of the respective pixels are obtained by linear interpolation of the colors of the vertices of a polygon which are independently designated.

Also, the RPU 9 performs scissoring. The scissoring is the process of cutting, when the pixel data sequence of polygons and sprites is generated, the part extending outside the viewport as designated in order not to display the part. While the pixel data sequence as generated is written to the line buffer LB1 or LB2 in the RPU 9, if the pixels to be written are set to a semi-transparent color, a color blending process is performed to blend together the colors of the pixels in the line buffer and the colors of the pixels to be written.

In step S6, the RPU 9 reads the information of the respective pixels to be displayed from the line buffer LB1 or LB2, and generates a digital data stream of a composite video signal by adding synchronous signals, a color burst signal and so forth. The data stream as generated is input to the video DAC 29, and an analog composite video signal is output from the video DAC 29.

Next, the details of the RPU 9 will be explained.

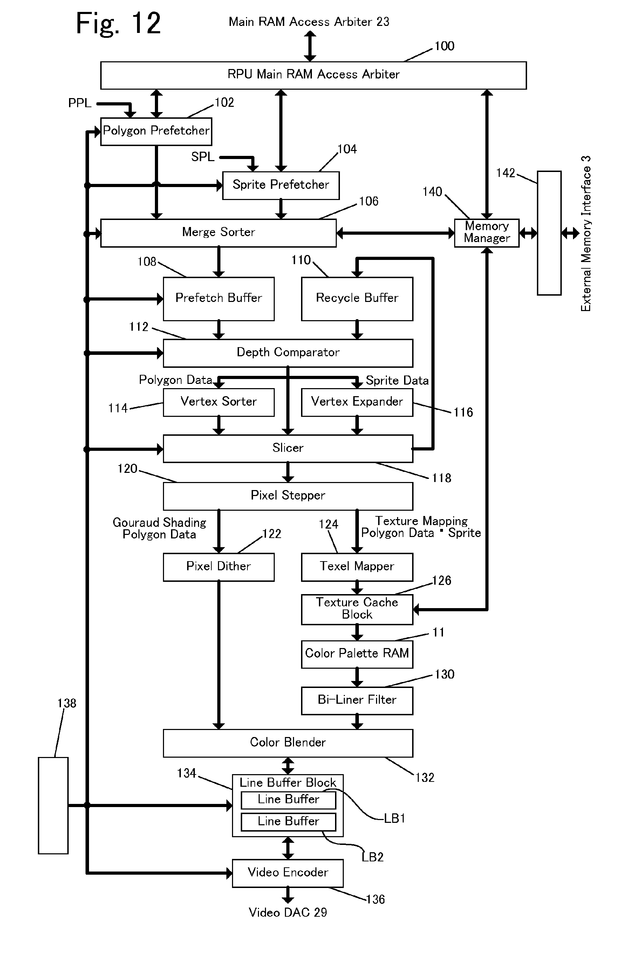

Fig. 12 is a block diagram showing the internal configuration of the RPU 9 of Fig. 10. As shown in Fig. 12, the RPU 9 includes an RPU main RAM access arbiter 100, a polygon prefetcher 102, a sprite prefetcher 104, a merge sorter 106, a prefetch buffer 108, a recycle buffer 110, a depth comparator 112, a vertex sorter 114, a vertex expander 116, a slicer 118, a pixel stepper 120, a pixel dither 122, a texel mapper 124, a texture cache block 126, a bi-liner filter 130, a color blender 132, a line buffer block 134, a video encoder 136, a video timing generator 138, a memory manager 140 and a DMAC interface 142. The line buffer block 134 includes the line buffers LB1 and LB2 each of which corresponds to one horizontal line of the screen. Meanwhile, in Fig. 12, the color palette RAM 11 is illustrated in the RPU 9 for the sake of clarity in explanation.

The RPU main RAM access arbiter 100 arbitrates requests for accessing the main RAM 25 which are issued from the polygon prefetcher 102, the sprite prefetcher 104 and the memory manager 140, and grants permission for the access request to one of them. The access request as permitted is output to the main RAM access arbiter 23, and arbitrated with the access requests issued from the other function units of the multimedia processor 1.

The polygon prefetcher 102 fetches the respective polygon structure instances which are sorted by the YSU 19 from the main RAM 25. A pulse PPL is input to the polygon prefetcher 102 from the YSU 19. The YSU 19 outputs the pulse PPL each time a polygon structure instance is fixed one after another from the highest rank during the sort operation. Accordingly, the polygon prefetcher 102 can be notified how many the polygon structure instances have been sorted among all the polygon structure instances of the polygon structure array.

Because of this, the polygon prefetcher 102 can acquire a polygon structure instance, each time a polygon structure instance is fixed one after another from the highest rank, without waiting for the completion of the sort operation of all the polygon structure instances. As a result, during displaying a frame, it is possible to perform the sort operation of the polygon structure instances for this frame. In addition to this, also in the case where a display operation is performed in accordance with interlaced scanning, it is possible to obtain a correct image as the result of drawing even if the sort operation for a field is performed during displaying this field by the use of the mode 2 as described above (refer to Fig. 9(b)). Meanwhile, the polygon prefetcher 102 can be notified when either the frame or the field is switched on the basis of a vertical scanning count signal VC output from the video timing generator 138.

The sprite prefetcher 104 receives the respective sprite structure instances from the main RAM 25 after sorting by the YSU 19. A pulse SPL is input to the sprite prefetcher 104 from the YSU 19. The YSU 19 outputs the pulse SPL each time a sprite structure instance is fixed from the highest rank of the sort operation. Accordingly, the sprite prefetcher 104 can be notified how many the sprite structure instances have been sorted among all the sprite structure instances of the sprite structure array.

Because of this, the sprite prefetcher 104 can acquire a sprite structure instance, each time a sprite structure instance is fixed from one after another from the highest rank, without waiting for the completion of the sort operation of all the sprite structure instances. As a result, during displaying a frame, it is possible to perform the sort operation of the sprite structure instances for this frame. In addition to this, also in the case where a display operation is performed in accordance with interlaced scanning, it is possible to obtain a correct image as the result of drawing even if the sort operation for a field is performed during displaying this field by the use of the mode 2 as described above (refer to Fig. 9(b)). Meanwhile, the sprite prefetcher 104 can be notified when either the frame or the field is switched on the basis of the vertical scanning count signal VC output from the video timing generator 138.

At this time, the polygon structure, the texture attribute structure and the sprite structure will be explained in detail.

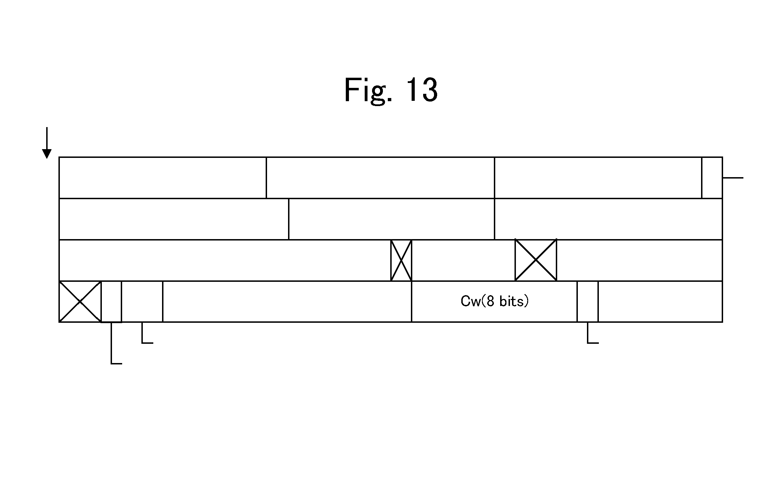

Fig. 13 is a view for showing an example of the polygon structure in the texture mapping mode. As shown in Fig. 13, in the case of the present embodiment, this polygon structure consists of 128 bits. The member "Type" of this polygon structure designates the drawing mode of the polygon and is set to "0" if the polygon is to be drawn in the texture mapping mode. The members "Ay", "Ax", "By", "Bx", "Cy" and "Cx" designate the Y-coordinate of a vertex "A", the X-coordinate of the vertex "A", the Y-coordinate of a vertex "B", the X-coordinate of the vertex "B", the Y-coordinate of a vertex "C", and the X-coordinate of the vertex "C" respectively of the polygon. These Y-coordinates and X-coordinates are set in the screen coordinate system.

The members "Bw", "Cw", "Light" and "Tsegment" designate the perspective collection parameter of the vertex "B" ( = Az/Bz), the perspective collection parameter of the vertex "C" ( = Az/Cz), a brightness and the storage location information of texture pattern data respectively of the polygon.

The members "Tattribute", "Map", "Filter", "Depth" and "Viewport" designate the index of the texture attribute structure, the format type of the texture pattern data, the filtering mode indicative of either a bi-liner filtering mode or a nearest neighbour, a depth value, and the information for designating the view port for scissoring respectively. The bi-liner filtering mode and the nearest neighbour will be described below.

These are the descriptions of the respective members of the polygon structure in the texture mapping mode, and one polygon structure instance (values assigned to the polygon structure) is used to define one polygon.

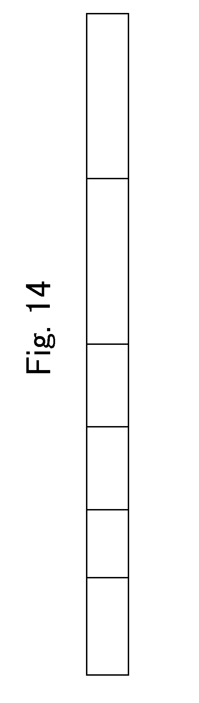

Fig. 14 is a view for showing an example of the texture attribute structure. As shown in Fig. 14, in the case of the present embodiment, this texture attribute structure consists of 32 bit. The members "Width", "Height", "M", "N", "Bit" and "Palette" of this texture attribute structure designate the width of the texture minus "1" (in units of texels), the height of the texture minus "1" (in units of texels), the number of mask bits applicable to the "Width" from the upper bit, the number of mask bits applicable to the "Height" from the upper bit, a color mode (the number of bits minus "1" per pixel), and a pallet block number. While the 512 entries of the color palette are divided into a plurality of blocks in accordance with the color mode as selected, the member "Palette" designates the pallet block to be used.

The instance of the texture attribute structure is not separately provided for each polygon to be drawn, but 64 texture attribute structure instances are shared by all the polygon structure instances in the texture mapping mode and all the sprite structure instances.

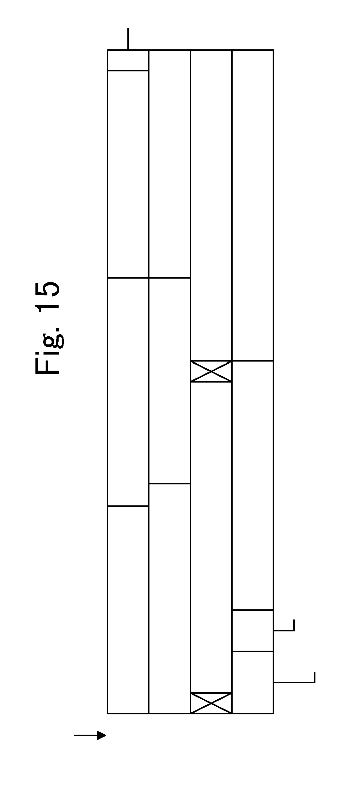

Fig. 15 is a view for showing an example of the polygon structure in the gouraud shading mode. As shown in Fig. 15, in the case of the present embodiment, the polygon structure of the gouraud shading mode consists of 128 bits and includes members "Ax" (11 bits), "Ay" (10 bits), "Bx" (11 bits), "By" (10 bits), "Cx" (11 bits), "Cy" (10 bits), "Ac" (15 bits), "Bc" (15 bits), "Cc" (15 bits), "Depth" (12 bits), "Viewport" (2 bits) and "Nalpha" (3 bits).

The member "Type" designates the drawing mode of a polygon, and is set to "1" if the polygon is to be drawn in the gouraud shading mode. The members "Ay", "Ax", "By", "Bx", "Cy" and "Cx" designate the Y-coordinate of a vertex "A", the X-coordinate of the vertex "A", the Y-coordinate of a vertex "B", the X-coordinate of the vertex "B", the Y-coordinate of a vertex "C", and the X-coordinate of the vertex "C" respectively of the polygon. These Y-coordinates and X-coordinates are set in the screen coordinate system.

The members "Ac", "Bc" and "Cc" designate the color data of the vertex "A" (5 bits for each component of RGB), the color data of the vertex "B" (5 bits for each component of RGB), and the color data of the vertex "C" (5 bits for each component of RGB) respectively of the polygon.

The members "Depth", "Viewport" and "Nalpha" designate a depth value, the information for designating the view port for scissoring, and $(1 - \alpha)$ used in alpha blending. This factor $(1 - \alpha)$ designates a degree of transparency in which "000" (in binary notation) designates a transparency of 0 %, i.e., a perfect nontransparency, and "111" (in binary notation) designates a transparency of 87.5 %.

These are the descriptions of the respective members of the polygon structure in the gouraud shading mode, and one polygon structure instance (values assigned to the polygon structure) is used to define one polygon.

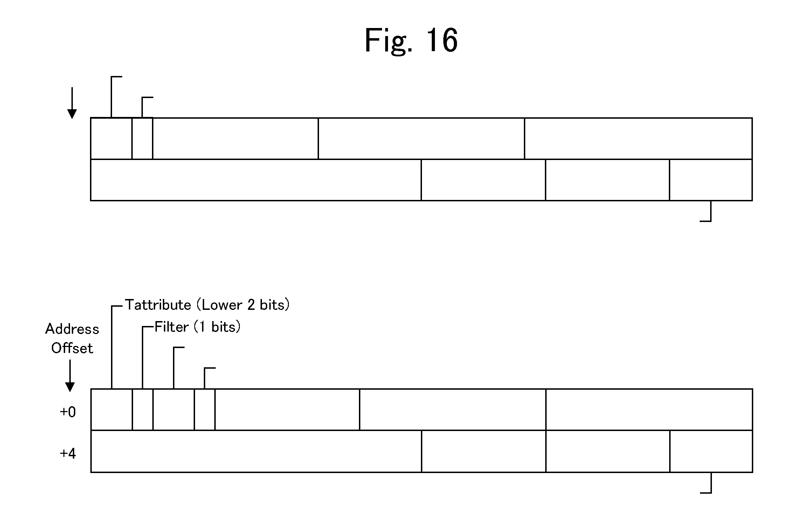

Fig. 16(a) is a view for showing an example of the sprite structure when scissoring is disabled; and Fig. 16(b) is a view for showing an example of the sprite structure when scissoring is enabled. As shown in Fig. 16(a), in the case of the present embodiment, the sprite structure when scissoring is disabled consists of 64 bits. The members "Ax" and "Ay" of this sprite structure designate the X coordinate and Y-coordinate of the upper left corner of the sprite. These X coordinate and Y-coordinate are set in the screen coordinate system.

The members "Depth", "Filter" and "Tattribute" designate a depth value, a filtering mode (the bi-liner filtering mode or the nearest neighbour), and the index of a texture attribute structure respectively. The members "ZoomX", "ZoomY" and "Tsegment" designate a sprite enlargement ratio (enlargement/reduction ratio) in the X-axis direction, a sprite enlargement ratio (enlargement/reduction ratio) in the Y-axis direction and the storage location information of texture pattern data.

As shown in Fig. 16(b), in the case of the present embodiment, the sprite structure array when scissoring is enabled consists of 64 bits. The members "Ax" and "Ay" of this sprite structure designate the X coordinate and Y-coordinate of the upper left corner of the sprite. These X coordinate and Y-coordinate are set in the screen coordinate system.

The members "Depth", "Scissor", "Viewport", "Filter" and "Tattribute" designate a depth value, a scissoring applicable flag, the information for designating the view port for scissoring, a filtering mode (the bi-liner filtering mode or the nearest neighbour), and the index of a texture attribute structure respectively. The members "ZoomX", "ZoomY" and "Tsegment" designate a sprite enlargement ratio (enlargement/reduction ratio) in the X-axis direction, a sprite enlargement ratio (enlargement/reduction ratio) in the Y-axis direction and the storage location information of texture pattern data.

In the case of the sprite structure when scissoring is enabled, the numbers of bits allocated to the X-coordinate and the Y-coordinate are respectively one bit less than those allocated when scissoring is disabled. When a sprite is arranged in the screen while scissoring is enabled, an offset of 512 pixels and an offset of 256 pixels are added respectively to the X-coordinate and the Y-coordinate by the vertex expander 116 to be described below. In addition to this, while the number of bits allocated to the depth value is also one bit less, one bit of "0" is added as the LSB of the depth value stored in the structure, when scissoring is enabled, by the texel mapper 124 to be described below so that the depth value is handled as an 8 bit value in the same manner as when scissoring is disabled.

These are the descriptions of the respective members of the sprite structure when scissoring is disabled and when scissoring is enabled, and one sprite structure instance (values assigned to the sprite structure) is used to define one sprite. The configuration of the texture attribute structure of the sprite is the same as the configuration of the texture attribute structure of the polygon as shown in Fig. 14. The instance of the texture attribute structure is not separately provided for each sprite to be drawn, but 64 texture attribute structure instances are shared by all the polygon structure instances in the texture mapping mode and all the sprite structure instances.

Returning to Fig. 12, the merge sorter 106 receives polygon structure instances together with the associated texture attribute structures, and sprite structure instances together with the associated texture attribute structures respectively from the polygon prefetcher 102 and the sprite prefetcher 104, performs a merge sort operation in accordance with the sort rules 1 to 4 which are the same as used by the YSU 19 as described above, and outputs the result to the prefetch buffer 108.

In other words, when a polygon structure instance is selected in accordance with the sort rules 1 to 4, if the polygon is to be drawn in the texture mapping mode, the merge sorter 106 outputs the polygon structure instance as polygon/sprite data PSD (128 bits) and the texture attribute structure instance associated therewith as a texture attribute structure instance TAI (32 bits) to the prefetch buffer 108.

On the other hand, when a polygon structure instance is selected in accordance with the sort rules 1 to 4, if the polygon is to be drawn in the gouraud shading mode, the merge sorter 106 outputs the polygon structure instance as polygon/sprite data PSD (128 bits) and the texture attribute structure instance TAI (32 bits) whose all bits are set to "0" to the prefetch buffer 108.

On the other hand, when a sprite structure instance is selected in accordance with the sort rules 1 to 4, the merge sorter 106 outputs the sprite structure instance as polygon/sprite data PSD (128 bits) and the texture attribute structure instance associated therewith as the texture attribute structure instance TAI (32 bits) to the prefetch buffer 108. However, in this case, the effective data of the polygon/sprite data PSD is aligned to the LSB so that the upper 64 bits are filled with "0".

The prefetch buffer 108 as has been detailedly discussed above is a buffer of an FIFO (first-in-first-out) structure used to store the sorted structure instances (i.e., the polygon/sprite data PSD and the texture attribute structure instances TAI), which are successively read from the merge sorter 106 and successively output in the same order as they are read. In other words, the structure instances are stored in the prefetch buffer 108 in the same order as sorted by the merge sorter 106. Then, the structure instances as stored are output in the same order as they are stored in the drawing cycle for displaying the corresponding polygons or sprites. Meanwhile, the prefetch buffer 108 can be notified of the horizontal line which is being drawn on the basis of the vertical scanning count signal VC output from the video timing generator 138. In other words, it can know when the drawing cycle is switched. In the case of the present embodiment, for example, the prefetch buffer 108 can share the same physical buffer with the recycle buffer 110, such that the physical buffer can store (128 bits + 32 bits)*128 entries inclusive of the entries of the recycle buffer 110.

The recycle buffer 110 as has been detailedly discussed above is a buffer of an FIFO structure for storing structure instances (i.e., the polygon/sprite data PSD and the texture attribute structure instances TAI), which are received from the slicer 118 and can be used again in the next drawing cycle (i.e., can be reused). Accordingly, the structure instances stored in the recycle buffer 110 are used also in the next drawing cycle. In the case of the present embodiment, for example, the recycle buffer 110 can share the same physical buffer with the prefetch buffer 108, such that the physical buffer can store (128 bits + 32 bits)*128 entries inclusive of the entries of the prefetch buffer 108.

The depth comparator 112 as has been detailedly discussed above compares the depth value included in the structure instance which is the first entry of the prefetch buffer 108 and the depth value included in the structure instance which is the first entry of the recycle buffer 110, selects the structure instance having a larger depth value (that is, to be displayed in a deeper position), and outputs it to the subsequent stage. In this case, if the structure instance as selected is a polygon structure instance, the depth comparator 112 outputs it to the vertex sorter 114, and if the structure instance as selected is a sprite structure instance, the depth comparator 112 outputs it to the vertex expander 116. Also, the depth comparator 112 outputs the structure instance as selected to the slicer 118. Meanwhile, the depth comparator 112 can be notified of the horizontal line which is being drawn on the basis of the vertical scanning count signal VC output from the video timing generator 138. In other words, it can know when the drawing cycle is switched.

The vertex expander 116 calculates the coordinates of the vertices of the sprite (the XY coordinates in the screen coordinate system and the UV coordinates in the UV coordinate system) on the basis of the coordinates (Ax, Ay) of the top left vertex of the sprite, the enlargement ratio "ZoomY" in the Y-axis direction and the enlargement ratio "ZoomX" in the X-axis direction which are included in the sprite structure instance as received and the value "Width", i.e., the width of the texture minus "1" and the value "Height", i.e., the height of the texture minus "1", which are included in the texture attribute structure instance associated with the sprite structure instance, and outputs them to the slicer 118 as polygon/sprite shared data CI (208 bits). However, each field WG$ ($ = 0, 1, 2) to be described below of the polygon/sprite shared data CI is output always as "0x0040" ( = 1.0). The structure (format) of the polygon/sprite shared data CI as output from the vertex expander 116 is the same as the structure (format) of the polygon/sprite shared data CI as output from the vertex sorter 114.

Here, the screen coordinate system is as described above. The UV coordinate system is a two-dimensional orthogonal coordinate system in which the respective texels for making up a texture pattern are arranged such that they are mapped to a polygon or a sprite.

The vertex sorter 114 acquires and calculates the parameters of the respective vertices of a polygon (XYUV coordinates, perspective collection parameters, and color data) from the polygon structure instance as received and the texture attribute structure instance associated therewith, sorts the parameters of the respective vertices in ascending order of the Y-coordinates thereof, and outputs them to the slicer 118 as the polygon/sprite shared data CI. The vertices are referred to as a vertex 0, a vertex 1 and a vertex 2 from the earliest one in the appearance order.

In other words, in the texture mapping mode, the vertex sorter 114 outputs the results of calculation, i.e., the parameters of the respective vertices 0 to 2 (XY coordinates, UV coordinates after perspective collection, perspective collection parameters) to the slicer 118 as the polygon/sprite shared data CI.

Also, in the gouraud shading mode, the vertex sorter 114 outputs the results of calculation, i.e., the parameters of the respective vertices 0 to 2 (XY coordinates, and color data) to the slicer 118 as the polygon/sprite shared data CI.

The structure (format) of the polygon/sprite shared data CI as output from the vertex sorter 114 is the same as the structure (format) of the polygon/sprite shared data CI as output from the vertex expander 116.

The structure of the polygon/sprite shared data CI output from the vertex sorter 114 and the vertex expander 116 will be explained. The polygon/sprite shared data CI consists of a field "F" (1 bit), WG$ (16 bits respectively), VR$ (16 bits respectively), UB$ (16 bits respectively), Y$ (10 bits respectively) and X$ (11 bits respectively) (208 bits in total). $ = 0, 1, 2, and the respective vertices are distinguished thereby.

The field "F" is a flag field indicating which of a polygon or a sprite is associated with the polygon/sprite shared data CI. Accordingly, the vertex sorter 114 stores "1" in the field "F" to indicate a polygon. On the other hand, the vertex expander 116 stores "0" in the field "F" to indicate a sprite.

In the case of the polygon/sprite shared data CI output from the vertex expander 116, the fields VR$, UB$, Y$ and X$ are the V coordinate, U coordinate, Y-coordinate and X coordinate of the vertex $ respectively. In this case, "0x0040" (= 1.0) is stored in the field WG$. As described above, the vertices $ are referred to as a vertex 0, a vertex 1 and a vertex 2 from the earliest one in the appearance order.

In the case of the polygon/sprite shared data CI which is output from the vertex sorter 114 and used in the texture mapping mode, the fields WG$, VR$, UB$, Y$ and X$ are the perspective collection parameter, V coordinate as perspective collected, U coordinate as perspective collected, Y-coordinate and X coordinate of each vertex $.

In the case of the polygon/sprite shared data CI which is output from the vertex sorter 114 and used in the gouraud shading, the fields WG$, VR$, UB$, Y$ and X$ are the green component, red component, blue component, Y-coordinate and X coordinate of each vertex $.

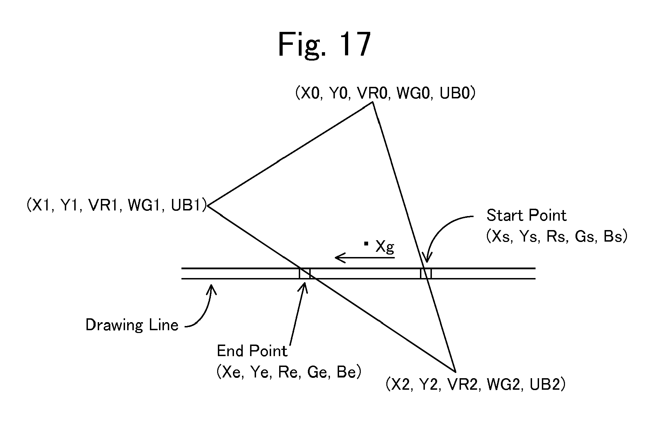

The operation of the slicer 118 will be explained with reference to Fig. 17 to Fig. 19. Fig. 17 is an explanatory view for showing the process of a polygon by the slicer 118 in the gouraud shading mode. As shown in Fig. 17, the slicer 118 obtains the XY coordinates (Xs, Ys) and (Xe, Ye) of the intersection points between the polygon (triangle) defined by the polygon/sprite shared data CI as given and the horizontal line to be drawn. When a polygon is processed as discussed here, the intersection point near the side which is not intersected by the horizontal line to be drawn is determined as the end point (Xe, Ye), and the intersection point located remote from this side is determined as the start point (Xs, Ys).

Then, in the range in which the drawing Y-coordinate "Yr" satisfies $Y0 \leq Yr < Y1$, the slicer 118 calculates the RGB values (Rs, Gs, Bs) of the intersecting start point by linear interpolation on the basis of the RGB values (VR0, WG0, UB0) of the vertex 0 and the RGB values (VR2, WG2, UB2) of the vertex 2 and calculates the RGB values (Re, Ge, Be) of the intersecting end point by linear interpolation on the basis of the RGB values (VR0, WG0, UB0) of the vertex 0 and the RGB values (VR1, WG1, UB1) of the vertex 1. Also, in the range in which the drawing Y-coordinate "Yr" satisfies $Y1 \leq Yr \leq Y2$, the slicer 118 calculates the RGB values (Rs, Gs, Bs) of the intersecting start point by linear interpolation on the basis of the RGB values (VR0, WG0, UB0) of the vertex 0 and the RGB values (VR2, WG2, UB2) of the vertex 2 and calculates the RGB values (Re, Ge, Be) of the intersecting end point by linear interpolation on the basis of the RGB values (VR2, WG2, UB2) of the vertex 2 and the RGB values (VR1, WG1, UB1) of the vertex 1.

Then, the slicer 118 calculates ΔR, ΔG, ΔB and ΔXg. In this case, ΔR, ΔG and ΔB are the changes respectively in R, G and B per ΔXg on the horizontal line to be drawn, and ΔXg is the change in the X-coordinate per pixel on the horizontal line to be drawn. ΔXg takes either "+1" or "-1".

$$\Delta R = (Re - Rs) / (Xe - Xs).$$

$$\Delta G = (Ge - Gs) / (Xe - Xs).$$

$$\Delta B = (Be - Bs) / (Xe - Xs).$$

$$\Delta Xg = (Xe - Xs) / |Xe - Xs|.$$

The slicer 118 transmits Xs, Rs, Gs, Bs, Xe, $\Delta R$, $\Delta G$, $\Delta B$ and $\Delta Xg$ as calculated to the pixel stepper 120 together with the structure instance as received from the depth comparator 112. Also, in the case where the polygon/sprite shared data CI as received from the vertex sorter 114 can be used in the next drawing cycle, the slicer 118 writes the structure instance as received from the depth comparator 112 to the recycle buffer 110. Meanwhile, on the basis of the vertical scanning count signal VC from the video timing generator 138 and the vertex coordinates of the polygon, it is possible to know whether or not the polygon/sprite shared data CI can be used in the next drawing cycle.

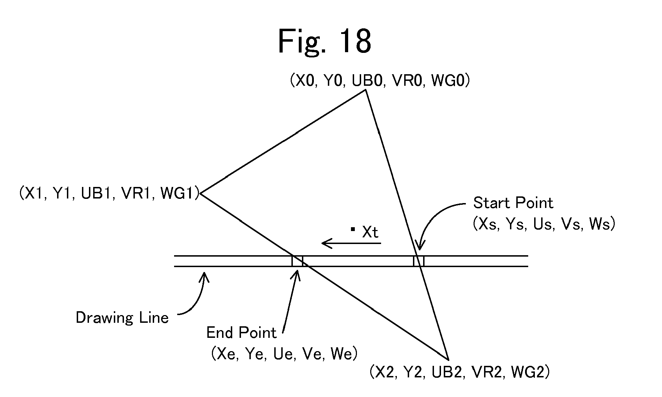

Fig. 18 is an explanatory view for showing the process of a polygon by the slicer 118 in the texture mapping mode. As shown in Fig. 18, the slicer 118 obtains the start point (Xs, Ys) and the end point (Xe, Ye) of the intersection points between the polygon (triangle) defined by the polygon/sprite shared data CI as given and the horizontal line to be drawn. This process is performed in the same manner as in performed for a polygon in the gouraud shading mode.

In what follows, the perspective collect function is described. In the texture mapping mode in which a three-dimensional image as converted by perspective projection is represented, the image as mapped is sometimes distorted when the texels corresponding to the drawing pixels on the screen are calculated simply by linear interpolation among the respective vertices of a texture in the UV space corresponding to the respective vertices of a polygon. The perspective collect function is provided for removing the distortion, and specifically the following process is performed.

The coordinates of the respective vertices "A", "B" and "C" of a polygon as mapped onto the UV space are referred to as (Au, Av), (Bu, Bv) and (Cu, Cv). Also, the view coordinates of the respective vertices A, B and C are referred to as (Ax, Ay, Az), (Bx, By, Bz) and (Cx, Cy, Cz). Then, linear interpolation is performed among (Au/Az, Av/Az, 1/Az), (Bu/Bz, Bv/Bz, 1/Bz) and (Cu/Cz, Cv/Cz, 1/Cz) in order to obtain values (u/z, v/z, 1/z), and the coordinates (U, V) of each texel are acquired as (u, v), i.e., a value "u" which is obtained by multiplying u/z and the reciprocal of 1/z and a value which "v" is obtained by multiplying v/z and the reciprocal of 1/z, such that the texture mapping after the perspective projection transformations can be accurately realized. In this description, the view coordinates are coordinates in the view coordinate system. The view coordinate system is a three-dimensional orthogonal coordinate system consisting of three axes XYZ which has its origin at the viewpoint, and the Z-axis is defined to have its positive direction in the viewing direction.

In the case of the present embodiment, in place of 1/Az, 1/Bz and 1/Cz to be assigned to the respective vertices, the values calculated by multiplying the respective values by "Az", i.e., Az/Az ( = Aw), Az/Bz ( = Bw) and Az/Cz ( = Cw) are assigned to the polygon structure (refer to Fig. 13). However, the parameter "Aw" for the vertex A is always "1" so that it is not set in the polygon structure.

Accordingly, in the case of the present embodiment, linear interpolation is performed among (Au*Aw, Av*Aw, Aw), (Bu*Bw, Bv*Bw, Bw) and (Cu*Cw, Cv*Cw, Cw) in order to obtain values (u*w, v*w, w), and the coordinates (U, V) of each texel are acquired as (u, v), i.e., a value "u" which is obtained by multiplying u*w and 1/w and a value "v" which is obtained by multiplying v*w and 1/w, such that the texture mapping after the perspective projection transformations can be accurately realized.

While keeping this in mind, in the range in which the drawing Y-coordinate "Yr" satisfies $Y0 \leq Yr < Y1$, the slicer 118 calculates the values (Us, Vs, Ws) of the intersecting start point by linear interpolation on the basis of the values (UB0, VR0, WG0) of the vertex 0 and the values (UB2, VR2, WG2) of the vertex 2, and calculates the values (Ue, Ve, We) of the intersecting end point by linear interpolation on the basis of the values (UB0, VR0, WG0) of the vertex 0 and the values (UB1, VR1, WG1) of the vertex 1. Also, in the range in which the drawing Y-coordinate "Yr" satisfies $Y1 \leq Yr \leq Y2$, the slicer 118 calculates the values (Us, Vs, Ws) of the intersecting start point by linear interpolation on the basis of the values (UB0, VR0, WG0) of the vertex 0 and the values (UB2, VR2, WG2) of the vertex 2, and calculates the values (Ue, Ve, We) of the intersecting end point by linear interpolation on the basis of the values (UB2, VR2, WG2) of the vertex 2 and the values (UB1, VR1, WG1) of the vertex 1.

This process will be explained in the exemplary case where the Y-coordinates of the respective vertices satisfies $By \leq Ay < Cy$ and where the drawing Y-coordinate "Yr" satisfies $Y1 \leq Yr \leq Y2$. In this case, the slicer 118 calculates the values (Us, Vs, Ws) of the intersecting start point by linear interpolation on the basis of the values (UBO, VR0, WG0) ( = (Bu*Bw, Bv*Bw, Bw)) of the vertex 0 and the values (UB2, VR2, WG2) ( = (Cu*Cw, Cv*Cw, Cw)) of the vertex 2, and calculates the values (Ue, Ve, We) of the intersecting end point by linear interpolation on the basis of the values (UB2, VR2, WG2) ( = (Cu*Cw, Cv*Cw, Cw)) of the vertex 2 and the values (UB1, VR1, WG1) ( = (Au*Aw, Av*Aw, Aw)) of the vertex 1.

Next, the slicer 118 calculates ΔU, ΔV, ΔW and ΔXt. In this case, ΔU, Δ V and Δ W are the changes per Δ Xt respectively in the U coordinate (= u*w), the V coordinate ( = v*w) and the perspective collection parameter "W" ( = w) on the horizontal line to be drawn, and ΔXt is the change in the X-coordinate per pixel on the horizontal line to be drawn. ΔXt takes either "+1" or "-1".

$$\Delta U = (Ue - Us) / (Xe - Xs).$$

$$\Delta V = (Ve - Vs) / (Xe - Xs).$$

$$\Delta W = (We - Ws) / (Xe - Xs).$$

$$\Delta Xt = (Xe - Xs) / |Xe - Xs|.$$

The slicer 118 transmits "Xs" "Us", "Vs", "Ws", "Xe", ΔU, ΔV, ΔW and ΔXt as calculated to the pixel stepper 120 together with the structure instance as received from the depth comparator 112. Also, in the case where the polygon/ sprite shared data CI as received from the vertex sorter 114 can be used in the next drawing cycle, the slicer 118 writes the structure instance as received from the depth comparator 112 to the recycle buffer 110. Meanwhile, on the basis of the vertical scanning count signal VC from the video timing generator 138 and the vertex coordinates of the polygon, it is possible to know whether or not the polygon/sprite shared data CI can be used in the next drawing cycle.

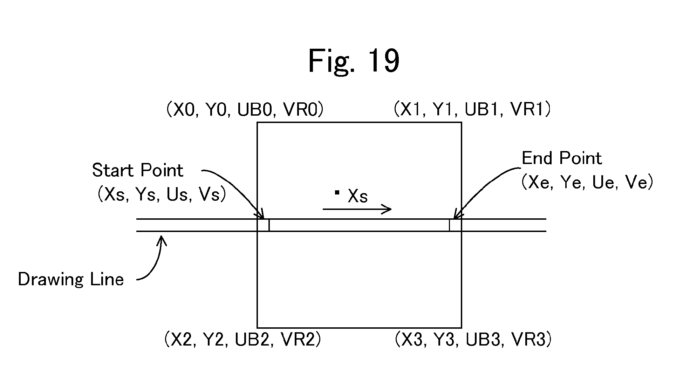

Fig. 19 is an explanatory view for showing the process of a sprite by the slicer 118. As shown in Fig. 19, the slicer 118 obtains the intersection points (Xs, Ys) and (Xe, Ye) between the sprite (rectangle) defined by the polygon/ sprite shared data CI as given and the horizontal line to be drawn. When a sprite is processed as discussed here, the intersection point which is drawn first is determined as the start point (Xs, Ys), and the intersection point which is drawn last is determined as the end point (Xe, Ye).

The coordinates of the respective vertices 0, 1, 2 and 3 of a sprite as mapped onto the UV space are referred to as (UB0, VR0), (UB1, VR1), (UB2, VR2), and (UB3, VR3). In this case, although UB3 and VR3 are not input to the slicer 118, these coordinates are calculated in the slicer 118 as described below.
UB3 = UB1.
VR3 = VR2.

The slicer 118 calculates the UV values (Us, Vs) of the intersecting start point by linear interpolation on the basis of the values (UB0, VR0) of the vertex 0 and the values (UB2, VR2) of the vertex 2, and calculates the UV values (Ue, Ve) of the intersecting end point by linear interpolation on the basis of the values (UB1, VR1) of the vertex 1 and the values (UB3, VR3) of the vertex 3.

Then, the slicer 118 calculates ΔU and ΔV. In this case, ΔU and ΔV are the changes per ΔXs respectively in the U coordinate and the V coordinate on the horizontal line to be drawn. ΔXs is the change in the X-coordinate per pixel on the horizontal line to be drawn and always takes "1", so that the calculation is not performed.

$$\Delta U = (Ue - Us) / (Xe - Xs).$$

$$\Delta V = (Ve - Vs) / (Xe - Xs).$$

$$\Delta Xs = (Xe - Xs) / |Xe - Xs| = 1.$$

The slicer 118 transmits "Xs", "Us", "Vs", "Xe", ΔU, ΔV and ΔXs as calculated to the pixel stepper 120 together with the structure instance as received from the depth comparator 112. Also, in the case where the polygon/sprite shared data CI as received from the vertex expander 116 can be used in the next drawing cycle, the slicer 118 writes the structure instance as received from the depth comparator 112 to the recycle buffer 110. Meanwhile, on the basis of the vertical scanning count signal VC from the video timing generator 138 and the vertex coordinates of the sprite, it is possible to know whether or not the polygon/sprite shared data CI can be used in the next drawing cycle.

In this case, the slicer 118 can recognize the polygon or sprite on the basis of the field F of the polygon/sprite shared data CI, and recognize the gouraud shading or texture mapping mode on the basis of the member "Type" of the polygon structure instance.

Returning to Fig. 12, when a polygon is processed in the gouraud shading mode, the pixel stepper 120 obtains the drawing X-coordinate and RGB values of the pixel to be drawn on the basis of the parameters ("Xs", "Rs", "Gs", "Bs", "Xe", $\Delta R$, $\Delta G$, $\Delta B$ and $\Delta Xg$) as given from the slicer 118, and outputs them to the pixel dither 122 together with the $(1 - \alpha)$ value. More specifically speaking, the pixel stepper 120 obtains the red components RX of the respective pixels by successively adding the change $\Delta R$ of the red component per pixel to the red component Rs at the intersection start point "Xs" (drawing start point). This process is performed to reach the intersection end point "Xe" (drawing end point). The same process is applied to the green component "GX" and the blue component "BX". Also, the drawing X-coordinate "Xr" is obtained by successively adding the change $\Delta Xs$ to the intersection start point "Xs". Meanwhile, X = 0 to |Xe - Xs|, and "X" is an integer.

$$RX = \Delta Xg * \Delta R * X + Rs.$$

$$GX = \Delta Xg * \Delta G * X + Gs.$$

$$BX = \Delta Xg * \Delta B * X + Bs.$$

$$Xr = \Delta Xs * X + Xs.$$

The pixel stepper 120 outputs the RGB values (RX, GX, BX) of each pixel as obtained and the drawing X-coordinate "Xr" to the pixel dither 122 together with the $(1 - \alpha)$ value and the depth value (Depth).

In addition, when a polygon is processed in the texture mapping mode, the pixel stepper 120 obtains the coordinates (U, V) by mapping the pixels to be drawn onto the UV space on the basis of the parameters ("Xs", "Us", "Vs", "Ws", "Xe", $\Delta U$, $\Delta V$, $\Delta W$ and $\Delta Xt$) as given from the slicer 118. More specifically speaking, the pixel stepper 120 obtains the perspective collection parameter "WX" of each pixel by successively adding the change $\Delta W$ per pixel of the perspective collection parameter to the perspective collection parameter "Ws" of the intersection start point "Xs" (drawing start point). This process is performed to reach the intersection end point "Xe" (drawing end point). Meanwhile, X = 0 to |Xe - Xs|, and "X" is an integer.

$$WX = \Delta Xt * \Delta W * X + Ws.$$

The pixel stepper 120 successively adds the change $\Delta U$ per pixel of the U coordinate to the U coordinate "Us" ( = u*w) of the intersection start point "Xs" (drawing start point), and multiplies the result thereof by the reciprocal of "WX" to obtain the U coordinate "UX" of each pixel. This process is performed to reach the intersection end point "Xe" (drawing end point). The same process is applied to the V coordinate VX ( = v*w). Also, the drawing X-coordinate "Xr" is obtained by successively adding the change $\Delta Xs$ to the intersection start point "Xs". Meanwhile, X = 0 to |Xe - Xs|, and "X" is an integer.

$$UX = (\Delta Xt * \Delta U * X + Us) * (1 / WX).$$

$$VX = (\Delta Xt * \Delta V * X + Vs) * (1 / WX).$$

$$Xr = \Delta Xs*X + Xs.$$

The pixel stepper 120 outputs the UV coordinates (UX, VX) of each pixel as obtained and the drawing X-coordinates "Xr" to the texel mapper 124 together with the structure instances (the polygon structure instance in the texture mapping mode and the texture attribute structure instance) received from the slicer 118.

Furthermore, for drawing a sprite, the pixel stepper 120 obtains the coordinates (U, V) of the pixel to be drawn as mapped onto the UV space from the parameters (Xs, Us, Vs, Xe, $\Delta$U, $\Delta$V and $\Delta$Xs) of the sprite given from the slicer 118. More specifically speaking, the pixel stepper 120 obtains the U coordinates UX of the respective pixels by successively adding the change $\Delta$U per pixel of the U coordinate to the U coordinate Us at the intersection start point "Xs" (drawing start point). This process is performed to reach the intersection end point "Xe" (drawing end point). The same process is applied to the V coordinates VX. Also, the drawing X-coordinate "Xr" is obtained by successively adding the change $\Delta$Xs, i.e., "1", to the intersection start point "Xs". Meanwhile, X = 0 to |Xe - Xs|, and "X" is an integer.

$$UX = \Delta Xs*\Delta U*X + Us.$$

$$VX = \Delta Xs*\Delta V*X + Vs.$$

$$Xr = X + Xs.$$

The pixel stepper 120 outputs the UV coordinates (UX, VX) of each pixel as obtained and the drawing X-coordinates "Xr" to the texel mapper 124 together with the structure instances (the sprite structure instance and the texture attribute structure instance) received from the slicer 118.

The pixel dither 122 adds noise to the fraction parts of the RGB values given from the pixel stepper 120 to make Mach bands inconspicuous by performing dithering. Meanwhile, the pixel dither 122 outputs the RGB values of the pixels after dithering to the color blender 132 together with the drawing X coordinates Xr, (1 - $\alpha$) values and the depth values.

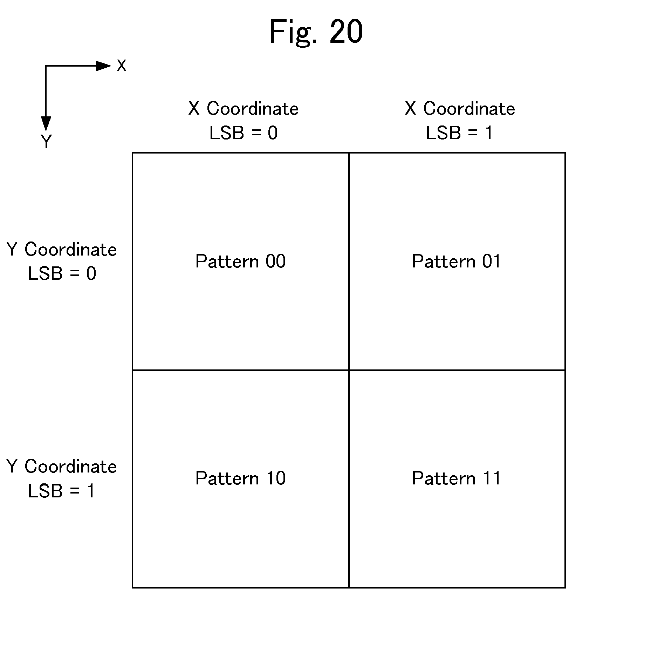

Fig. 20 is an explanatory view for showing the dithering process by the pixel dither 122. As shown in Fig. 20, the dither patterns are set in a control register (not shown in the figure) of the RPU 9 in the form of a 2 x 2 array of pixel blocks. One of the four patterns "00", "01", "10" and "11" is determined to be applied in accordance with the LSBs of the XY coordinates of the drawing pixel of the screen coordinate system.

The size of each pattern is 2 bits which is added to the fraction part of each of the RGB values. When there is a carry as the result of addition, the carry is added to the integer part. Since only the integer parts of the RGB values are used actually as the display color, unless all the values of the dither patterns are equal, noise appears the boundary between colors to make Mach bands inconspicuous.

Returning to Fig. 12, if the member "Filter" of the texture attribute structure is "0", the texel mapper 124 calculates and outputs four address sets, each consisting of a word address WAD and a bit address BAD, to point to four texels in the vicinity of the coordinates (UX, VX). On the other hand, if the member "Filter" of the texture attribute structure is "1", the texel mapper 124 calculates and outputs one address set of the word address WAD and the bit address BAD pointing to the texels nearest the coordinates (UX, VX). Also, if the member "Filter" of the texture attribute structure is "0", the bi-liner filter parameters BFP corresponding to the coefficients of the respective texels are calculated and output. Furthermore, while the depth values (corresponding to the members "Depth") of the sprites when scissoring is disabled, the sprites when scissoring is enabled, and the polygons, are given in different formats, they are output after being converted in the same format.

The texture cache block 126 calculates the addresses of the respective texels on the basis of the word addresses WAD, bit addresses BAD, and the member "Tsegment" of the structure instance as output from the texel mapper 124. When the texel data pointed to by the address as calculated has already been stored in a cache, an index for selecting an entry of the color palette RAM 11 is generated on the basis of the texel data as stored and the member "Palette" of the attribute structure and output to the color palette RAM 11.

On the other hand, when the texel data has not been stored in the cache, the texture cache block 126 outputs an instruction to the memory manager 140 to acquire texel data. The memory manager 140 acquires the necessary texture pattern data from the main RAM 25, and stores it in a cache of the texture cache block 126. Also, the memory manager 140 acquires the texture pattern data required in the subsequent stages from the external memory 50 in response to the instruction from the merge sorter 106, and stores it in the main RAM 25.

At this time, for the texture pattern data to be used for polygons in the texture mapping mode, the memory manager 140 acquires the entirety of data as mapped onto one polygon at a time and stores it the main RAM 25, while for the texture pattern data to be used for sprites, the memory manager 140 acquires the data as mapped onto one sprite, one line at a time, and stores it the main RAM 25. This is because, in the case where the group of pixels included in a horizontal line to be drawn is mapped onto the UV space, the group of pixels can be mapped onto any straight line in the UV space when drawing a polygon while the group of pixels can be mapped always onto a line in parallel with the U axis of the UV space when drawing a sprite.

In the case of the present embodiment, the cache of the texture cache block 126 consists of 64 bits x 4 entries, and the block replacement algorithm is LRU (least recently used).

The color palette RAM 11 outputs, to the bi-liner filter 130, the RGB values and the $(1 - \alpha)$ value for translucent composition stored in the entry which is pointed to by the index generated by concatenating the member "Palette" with the texel data as input from the texture cache block 126. The bi-liner filter parameters BFP, the depth values and the drawing X coordinates Xr are output to the bi-liner filter 130 as they are.

The bi-liner filter 130 performs bi-liner filtering. In the texture mapping mode, it is the simplest method of calculating the color for drawing a pixel to acquire the color data of a texel located in the texel coordinates nearest the pixel coordinates (UX, VX) mapped onto the UV space, and calculate the color for drawing the pixel on the basis of the color data as acquired. This technique is referred to as the "nearest neighbor".

However, if the distance between two points in the UV space onto which adjacent pixels are mapped is extremely smaller than the distance corresponding to one texel, that is, if a texture pattern is greatly expanded on the screen after mapping, the boundary between texels conspicuously appears, in the case of the nearest neighbor, resulting in coarse mosaic texture mapping. In order to remove such a shortcoming, the bi-liner filtering is performed.

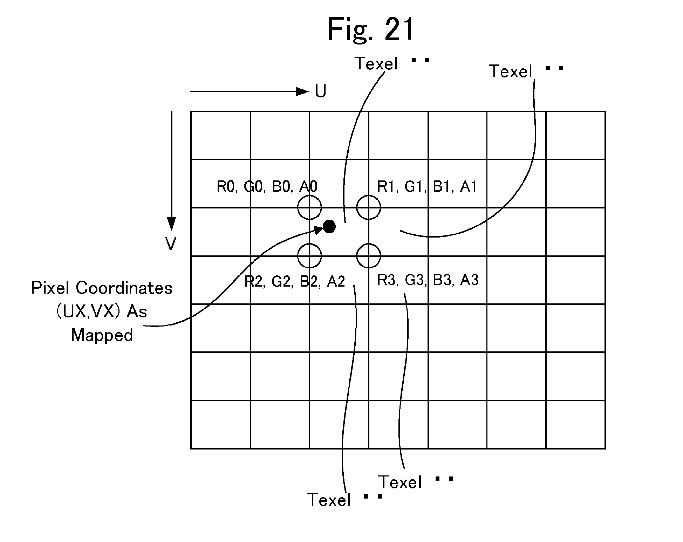

Fig. 21 is an explanatory view for showing the bi-liner filtering by means of the bi-liner filter 130. As shown in Fig. 21, the bi-liner filter 130 calculates the weighted averages of the RGB values and the $(1 - \alpha)$ values of the four texels nearest the pixel coordinates (UX, VX) as mapped onto the UV space, and determines a pixel drawing color. By this process, the colors of texels are smoothly adjusted, and the boundary between texels becomes inconspicuous in the mapping result. In particular, the bi-liner filtering is performed by the following equation (the formula for bi-liner filtering). However, in the following equation, "u" is the fraction part of the U coordinate UX, "v" is the fraction part of the V coordinate VX, "nu" is $(1 - u)$, and "nv" is $(1 - v)$.

```
R = R0*nu*nv + R1*u*nv + R2*nu*v + R3*u*v.


G = G0*nu*nv + G1*u*nv + G2*nu*v + G3*u*v.


B = B0*nu*nv + B1*u*nv + B2*nu*v + B3*u*v.


A = A0*nu*nv + A1*u*nv + A2*nu*v + A3*u*v.
```

The values R0, R1, R2 and R3 are the R values of the above four texels respectively; the values G0, G1, G2 and G3 are the G values of the above four texels respectively; the values B0, B1, B2 and B3 are the B values of the above four texels respectively; and the values A0, A1, A2 and A3 are the $(1 - \alpha)$ values of the above four texels respectively.

The bi-liner filter 130 outputs the RGB values and the "A" value (i.e., the $(1 - \alpha)$ value) of the pixel as calculated to the color blender 132 together with the depth value and the drawing X coordinates Xr.

Referring to Fig. 12, the line buffer block 134 will be explained in advance of explaining the color blender 132. The line buffer block 134 includes the line buffers LB1 and LB2, which are used in a double buffering mode in which when one buffer is used for displaying operation the other buffer is used for drawing process, and the purposes of the buffers are alternately switched during use. The line buffer LB1 or LB2 used for display serves to output the RGB values to the video encoder 136 in accordance with the horizontal scanning count signal HC and the vertical scanning count signal VC which are output from the video timing generator 138 for each pixel.

The color blender 132 performs the translucent composition process. More specific description is as follows. The color blender 132 performs the alpha blending on the basis of the following equations by the use of the RGB values and the $(1 - \alpha)$ value of the pixel as given from the pixel dither 122 or the bi-liner filter 130 and the RGB values stored in the line buffer LB corresponding to the location of the pixel to be drawn (the pixel at the drawing X coordinates Xr), and writes the result of the alpha blending to the same location of the pixel to be drawn in the line buffer LB.

$$Rb = Rf*(1 - \alpha r) + Rr.$$

$$Gb = Gf*(1 - \alpha r) + Gr.$$

$$Bb = Bf*(1 - \alpha r) + Br.$$

$$\alpha b = \alpha f*(1 - \alpha r) + \alpha r.$$

In the above equations, "1 - $\alpha r$" is the (1 - $\alpha$) value as given from the pixel dither 122 or the bi-liner filter 130. "Rr", "Gr" and "Br" are the RGB values as given from the pixel dither 122 or the bi-liner filter 130 respectively. "Rf", "Gf" and "Bf" are the RGB values as acquired from the location of the pixel to be drawn in the line buffer LB which is used for drawing. In the case of the typical algorithm of alpha blending, "Rr", "Gr" and "Br" in the above equation are replaced respectively with Rr*$\alpha r$, Gr*$\alpha r$ and Br*$\alpha r$, however, in the case of the present embodiment, the values of "Rr", "Gr" and "Br" stand for the calculation results of Rr*$\alpha r$, Gr*$\alpha r$ and Br*$\alpha r$ which are prepared in advance so that the arithmetic circuitry can be simplified.

The video encoder 136 converts the RGB values as input from the line buffer LB1 or LB2 used for display and the timing information as input from the video timing generator 138 (a composite synchronous signal SYN, a composite blanking signal BLK, a burst flag signal BST, a line alternating signal LA and the like) into a data stream VD representing the composite video signal in accordance with a signal VS. The signal VS is a signal indicative of a television system (NTSC, PAL or the like).

The video timing generator 138 generates the horizontal scanning count signal HC and the vertical scanning count signal VC, and the timing signals such as the composite synchronous signal SYN, the composite blanking signals BLK, the burst flag signal BST, the line alternating signal LA and the like on the basis of clock signals as input. The horizontal scanning count signal HC is counted up in every cycle of the system clock, and reset when scanning a horizontal line is completed. Also, the vertical scanning count signal VC is counted up each time the scanning of the 1/2 of horizontal line is completed, and reset after each frame or field is scanned.

Meanwhile, next is a detailed explanation of the sort operation by the YSU 19 of Fig. 10 with reference to the drawings. As has been discussed above, the sort algorithm used in the sort operation by the YSU 19 is the heap sort algorithm.

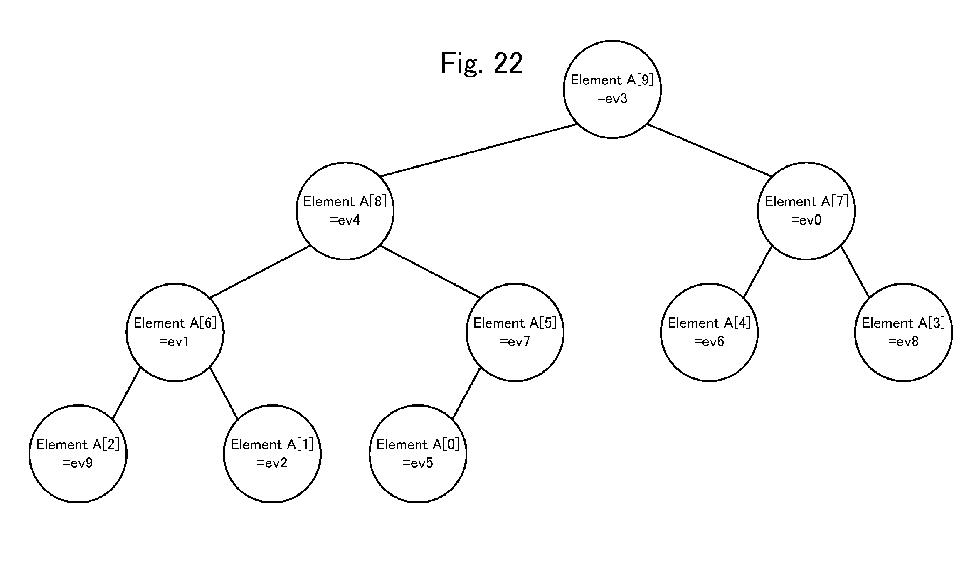

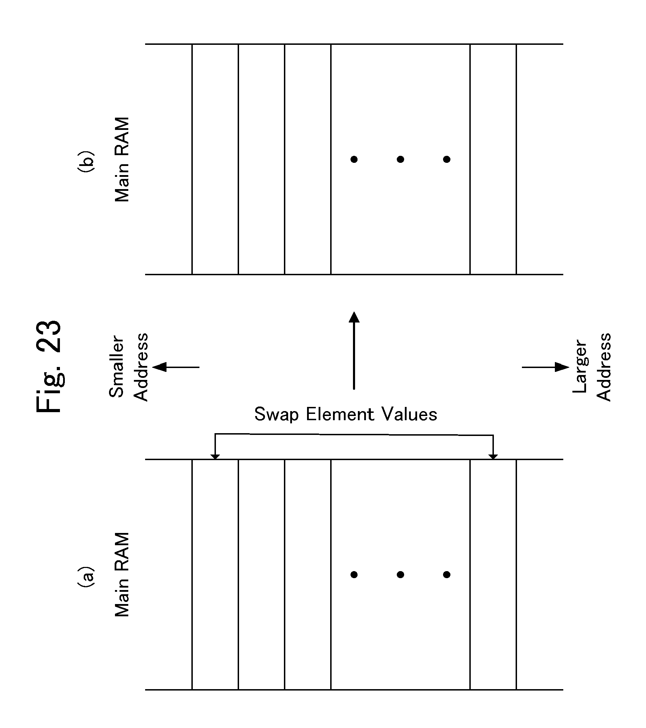

As explained above, the sort operation of the polygon structure array and the sort operation of the sprite structure array are separately performed. However, since the same process is performed for the respective sort operation, in the following description with reference to Fig. 22 and Fig. 23, the array and the elements thereof should be considered as the polygon structure array and the polygon structure instances respectively in the case of the sort operation of the polygon structure array, and the array and the elements thereof should be considered as the sprite structure array and the sprite structure instances respectively in the case of the sort operation of the sprite structure array.

Generally speaking, the elements of an array may be defined as indexed variables (containers) for assigening values or directly as the values which are assigned to the indexed variables. In the case of the present embodiment, when these two types of definitions have to be distinguished, an element of the array as a variable (container) is referred to as an "element", and a value which is assigned to a variable is referred to as "an element value" or "the value of an element".

Fig. 22 is a view for showing a heap structure of the array "A" which is built after the heap operation by the YSU 19 of Fig. 10. In Fig. 22, the number of elements of the array "A" is "10", and the element values of the elements A[0] to A[9] before the Y sort are referred to as ev0 to ev9.

Referring to Fig. 22, in the case of the present embodiment, the heap structure is a binary tree structure in which each parent is connected to two children. However, at an end of the heap structure, there may be a parent having only one child. The rank of a parent is always higher than those of its children, however, the ranking between two children is not predetermined by a particular rule.

In this case, the ranks are the priority levels among the structure instances (the polygon structure instances in the case of the Y sort of the polygon structure array, and the sprite structure instances in the case of the Y sort of the sprite structure array) as defined on the basis of the sort rules 1 to 4 (the sort rules 1 to 3 in the case of non-interlaced scanning). In other words, the ranks are the priority levels among the element values (the element values of the polygon structure array in the case of the Y sort of the polygon structure array, and the element values of the sprite structure array in the case of the Y sort of the sprite structure array) as defined on the basis of the sort rules 1 to 4 (the sort rules 1 to 3 in the case of non-interlaced scanning). Since the rank is higher as the position in the tree structure is higher, the element value "ev3" is the highest element value in the example of Fig. 22.

The method of storing the heap structure in the main RAM 25 will be explained. In the case of a typical heap structure, element values are stored in the memory from the first element of the array in descending order of the ranks from the element value of the highest rank parent. In the heap sort operation, since the sort results are successively fixed one after another, an element value fixed in the ranking order is swapped with the element value of the last child of the heap structure for the purpose of making effective use of the memory space. Accordingly, the element value of the highest rank parent is stored in the end of the array and separated from the heap structure. Contrary to this, in the case of the present embodiment, the heap structure is stored in the array of the memory in the order inverse to the usual order. This point will be explained with reference to the heap structure of Fig. 22 as an example.

Fig. 23 is an explanatory view for showing the method of storing the heap structure of Fig. 22 in the main RAM 25. As shown in Fig. 23 (a) and Fig. 22, in the case of the heap structure of the present embodiment, element values are stored in the main RAM 25 from the last element of the array "A" in descending order of the ranks from the element value of the highest rank parent. Then, as shown in Fig. 23(b), the element value "ev3" of the highest rank parent which is fixed in the ranking order and stored in the last element A[9] of the array "A" is swapped with the child element value "ev5" which is stored in the first element A[0] of the array "A", and then the first element A[0] storing the element value "ev3" is separated from the heap structure. The reason is as follows.

As has been discussed above, each time a rank (sort result) is fixed, the YSU 19 outputs one pulse of the pulse signal (the pulse signal PPL in the case of a polygon, or the pulse signal SPL in the case of a sprite) to the RPU 9. After receiving these pulse signals, the RPU 9 reads the element value fixed in the ranking order, i.e., the structure instance fixed in the ranking order from the top of the array for the drawing process. Because of this, the heap structure is stored in the main RAM 25 in the order inverse to the usual order.

The size of one element of the array will be explained. The size of one element of the array differs between the polygon structure and the sprite structure. In the case of the polygon structure, one element of the array (one polygon structure instance) consists of 16 bytes, while in the case of the sprite structure, one element of the array (one sprite structure instance) consists of 8 bytes (refer to Fig. 13, Fig. 15 and Fig. 16). However, since the polygon structure instances and the sprite structure instances are stored in separate arrays, there are no elements having different sizes mixedly stored in the same array in the main RAM 25. Also, the YSU 19 separately performs the sort operation of the polygon structure array and the sort operation of the sprite structure array.

Next, the Y sort operation of the polygon structure array by the YSU 19 will be explained with reference to a flow chart. The Y sort operation of the sprite structure array by the YSU 19 is performed in the same process flow as the Y sort operation of the polygon structure array, and therefore no redundant description is repeated.

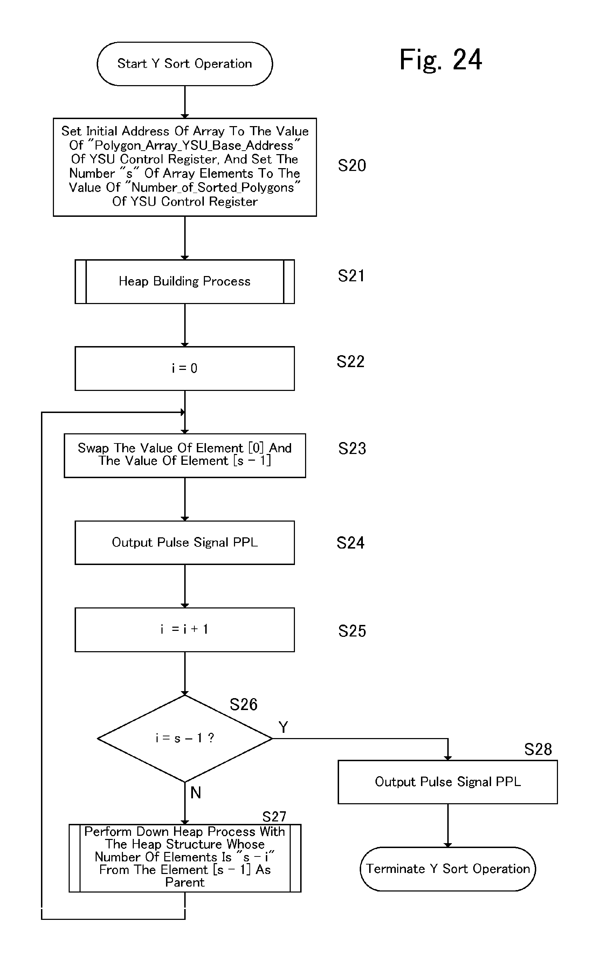

Fig. 24 is a flow chart for showing one exemplary sequence of the Y sort operation of the polygon structure array by the YSU 19 of Fig. 10. Meanwhile, in Fig. 24 and Fig. 25 to Fig. 27 to be described below, the array is considered as the polygon structure array, unless otherwise specified.

Referring to Fig. 24, in step S20, the YSU 19 acquires the initial address of the array to be sorted from a control register "Polygon Array YSU Base Address" (not shown in the figure) of the YSU 19 in advance of starting the sort operation of the array, and acquires the number "s" of elements of the array from a control register "Number of Sorted Polygons" (not shown in the figure) of the YSU 19. Incidentally, s = 10 in the case of the example of Fig. 22 and Fig. 23.

Meanwhile, in the case where the sprite structure array is sorted, the YSU 19 acquires the initial address of the sprite structure array from a control register "Sprite_Array_YSU_Base_Address" (not shown in the figure) of the YSU 19, and acquires the number "s#" of elements of the array from a control register "Number_of_Sorted_Sprites" (not shown in the figure) of the YSU 19.

In the next step S21, the YSU 19 builds the heap structure (the heap building process). The details of the heap building process will be described later. After completing this process, a heap structure is built through the entirety of the array, in order that it is guaranteed that the rank of any parent is always higher than those of its children in the connection among the respective elements. Accordingly, after the process of building the heap structure, the rank of the highest rank parent element, i.e., the rank of the "root" parent element is fixed as the highest rank element among all the elements of the array.

After then, the YSU 19 swaps (exchanges) the value of the "root" parent element for the value of the last child element of the heap structure each time one element is fixed in the ranking order from the highest rank. This means that the "root" parent element fixed in the ranking order is separated from the heap structure, and successively arranged in the main RAM 25 from the top element of the array.

Accordingly, the YSU 19 assigns "0" to the variable "i" in step S22 next to step S21 for the purpose of swapping the value of the parent element which is fixed as the highest rank element, i.e., the value of the element [s-1] for the value of the last child element of the heap structure, i.e., the value of the element [0], and swaps the value of the element [0] for the value of the element [s-1] in the next step S23. Namely, the value of the element [0] is assigned to the element [s-1], while the value of the element [s-1] is assigned to the element [0]. After the swapping, the element [0] is separated from the heap structure. Meanwhile, in the case of the example as shown in Fig. 22 and Fig. 23, the value "ev5" of the element A[0] is swapped with the value "ev3" of the element A[9].

In step S23 following step S27, the YSU 19 swaps the value of the parent element which is fixed as the highest rank element in the current heap structure, i.e., the value of the element [s-1] for the value of the last child element of the current heap structure, i.e., the value of the element [i] after incrementing the variable "i" (in step S25). That is, the value of the element [i] is assigned to the element [s-1], while the value of the element [s-1] is assigned to the element [i]. After the swapping, the element [i] is separated from the heap structure.

In the following step S24, the YSU 19 outputs one pulse of the pulse signal PPL to the RPU 9 in order to notify that one element is fixed in the ranking order. Incidentally, in the case of the sort operation of the sprite structure array, the YSU 19 outputs one pulse of the pulse signal SPL to the RPU 9. In the next step S25, the YSU 19 increments the value of the variable "i". Accordingly, the variable "i" is set always in order to point to the end of the heap structure. This means that the element [i] before increment is separated from the heap structure, and the element [i] after increment becomes the end of the heap structure.

If the variable "i" as incremented in step S25 is equal to "s - 1", the element included in the heap structure which has not been sorted yet is only the element [s-1]. This means that the sort operation of all the element value has been completed. Accordingly, if it is determined that "i = s - 1" in step S26, the YSU 19 proceeds to step S28, outputs one pulse of the pulse signal PPL (the pulse signal SPL in the case of a sprite) indicating that the last element value is fixed in the ranking order, and then complete the Y sort operation.

On the other hand, if it is determined that the variable "i" is not equal to "s - 1" in step S26, the Y sort operation is not completed so that the YSU 19 proceeds to step S27.

At this time, the value of the last child element of the heap structure is stored in the location of the "root" parent by the swapping operation in step S23 so that the heap structure is disturbed. In order to build again the heap structure from this condition, the YSU 19 performs the "down heap process" in step S27. In this case, if there is a child element having a higher rank than its parent element, the value of the child element is swapped with the value of the parent element, and this process is repeatedly performed, from the parent at the "root" to the last element of the heap structure, by regarding the child element after swapping as the next parent element, while this process is referred to as the "down heap process". The details of the down heap process will be described later.

In step S27, the down heap process is performed from the element [s-1] as a starting parent while the number of elements of the heap structure is set to "s - i". When the down heap process is completed, the heap structure is built again. Accordingly, when the process in step S27 is completed, the rank of the parent element at the "root" is fixed as the highest rank in the current heap structure. Thereafter, returning to step S23, the sort operation is continued.

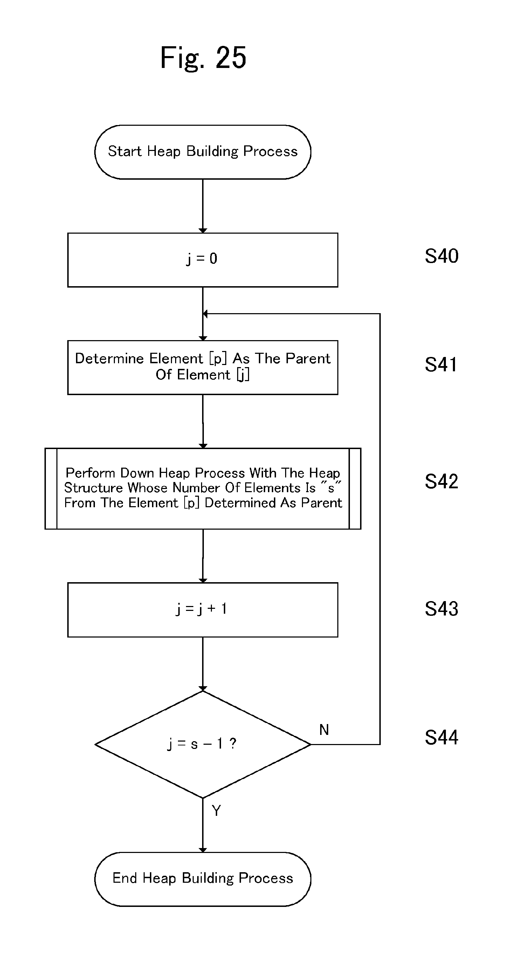

Fig. 25 is a flow chart for showing an exemplary sequence of the heap building process in step S21 of Fig. 24. Referring to Fig. 25, the YSU 19 assigns "0" to the variable "j" in step S40. The variable "j" serves to point to the first child element to be handled by the down heap process, and points to the last element of the entirety of the heap structure, i.e., the element [0] in the initial state.

In the next step S41, the YSU 19 determines the element [p] which is the parent of the element [j]. The index "p" of the parent element [p] is calculated by the following equation. In the following equation, "s" is the number of elements of the entirety of the heap structure. However, the quotient of the division in the right-hand side is always obtained as an integer by discarding the remainder.

$$p = s - (s - j) / 2.$$

In step S42, the YSU 19 performs the down heap process from the parent element [p] determined in step S41 as a parent while the number of entire elements of the heap structure is set to "s". The details of the down heap process will be described later.

After the down heap process in step S42 is completed, in step S43, the YSU 19 increments the value of the variable "j". Then, if the value of the variable "j" after incrementing is smaller than "s - 1" in step S44, the YSU 19 returns to step S41. On the other hand, if the value of the variable "j" after incrementing is equal to "s - 1", the YSU 19 completes the heap building process, and proceeds to step S22 of Fig. 24.

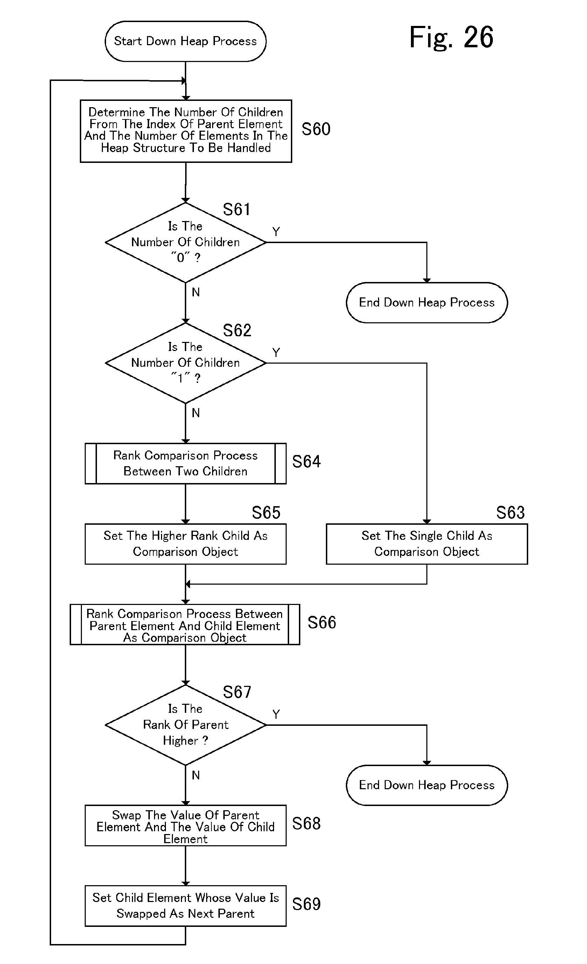

Fig. 26 is a flow chart for showing an exemplary sequence of the down heap process. This down heap process is performed in step S27 of Fig. 24 and in step S42 of Fig. 25.

Referring to Fig. 26, in step S60, the YSU 19 determines the number of children of a parent on the basis of the index of the parent element and the number of elements in the heap structure to be handled. If the index of the parent element is "p" and the number of elements in the heap structure to be handled is "s", the YSU 19 determines that the number of the children is "2" when the value of 2*(s - p) is smaller than "s", that the number of the children is "1" when the value of 2*(s - p) is equal to "s", and that the number of the children is "0" when the value of 2*(s - p) is larger than "s".

If it is determined that the number of the children is "0" in step S61, the YSU 19 terminates the down heap process. Also, if it is determined that the number of the children is "1" in step S62, the YSU 19 proceeds to step S63 in which the child is set as the object to be compared with the parent, and proceeds to step S66. On the other hand, if it is determined that the number of the children is not "1", i.e., is "2" in step S62, the YSU 19 proceeds to step S64.

In step S64, since the number of the children is "2", the YSU 19 performs a rank comparison process for determining which child has a higher rank. The details of the rank comparison process will be described later. Then, in step S65, the YSU 19 sets the higher rank child as the object to be compared with the parent as a result of the rank comparison process, and the process proceeds to step S66.

In step S66 following step S63 or step S65, the YSU 19 performs the rank comparison process between the parent element and the child element determined as the comparison object. If the YSU 19 determines in step S67 that the rank of the parent is higher, the down heap process is terminated. Conversely, if it is determined that the rank of the child is higher, in step S68, the YSU 19 swaps the value of the parent element for the value of the child element as the comparison object. After the swapping operation, in step S69, the YSU 19 sets the child element whose value is swapped (i.e., the element storing the value of the parent element before swapping) as the next parent to be handled by returning to step S60.

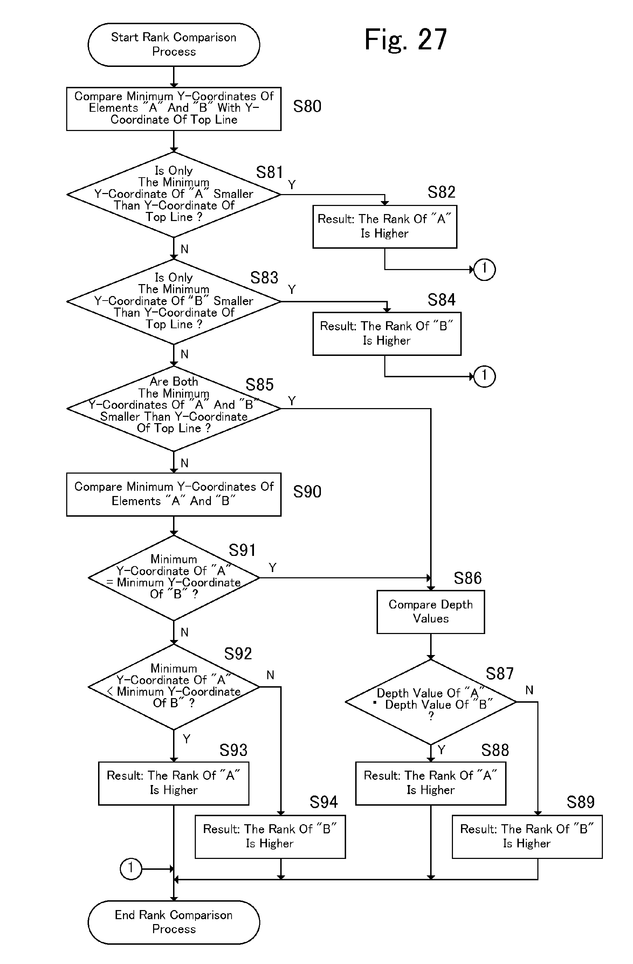

Fig. 27 is a flow chart showing an exemplary sequence of the rank comparison process. This rank comparison process is performed in steps S64 and S66 of Fig. 26. In the rank comparison process, two polygon structure instances are compared with each other in ranking on the basis of the sort rules 1 to 4 (the sort rules 1 to 3 in the case of non-interlaced scanning). That is to say, in the rank comparison process, the ranks of two elements of the array are compared with each other on the basis of the sort rules 1 to 4 (the sort rules 1 to 3 in the case of non-interlaced scanning). In this description, the two elements (polygon structure instances) as the comparison objects are referred to as elements "A" and "B" respectively.

In step S80, the YSU 19 compares the minimum Y-coordinate and the Y-coordinate of the drawing start line (drawing top line) for each of the elements "A" and "B". In this example, since the elements "A" and "B" as the comparison objects are polygon structure instances, the minimum value among the members "Ay", "By" and "Cy" is handled as the minimum Y-coordinate (refer to Fig. 13 and Fig. 15). Incidentally, in the case where the elements "A" and "B" as the comparison objects are sprite structure instances, the value of the member "Ay" + "256" is handled as the minimum Y-coordinate when scissoring is enabled, and the value of the member "Ay" itself is handled as the minimum Y-coordinate when scissoring is disabled (refer to Fig. 16).

If it is determined that only the minimum Y-coordinate of the element "A" is less than or equal to the Y-coordinate of the drawing start line in step S81, i.e., if it is determined that only the polygon corresponding to the element "A" intersects with the drawing start line or is located above the drawing start line, the YSU 19 proceeds to step S82 in which it is determined that the element "A" has a higher rank, and the rank comparison process is terminated (the sort rule 1).

If it is determined that only the minimum Y-coordinate of the element "B" is less than or equal to the Y-coordinate of the drawing start line in step S83, i.e., if it is determined that only the polygon corresponding to the element "B" intersects with the drawing start line or is located above the drawing start line, the YSU 19 proceeds to step S84 in which it is determined that the element "B" has a higher rank, and the rank comparison process is terminated (the sort rule 1).

If it is determined that both the minimum Y-coordinates of the element "A" and element "B" are less than or equal to the Y-coordinate of the drawing start line, it means that the polygon corresponding to each of the element "A" and element "B" intersects with the drawing start line or is located above the drawing start line. In the case where both the minimum Y-coordinates of the element "A" and element "B" are located above the drawing start line, the polygons corresponding to the element "A" and element "B" are not drawn in the screen, and thereby the ranking as determined on the basis of the sort rule 1 has no influence on the drawing result. This is true also in the case of sprites.

Accordingly, if it is determined in step S85 that both the minimum Y-coordinates of the element "A" and element "B" are less than or equal to the Y-coordinate of the drawing start line, i.e., if both the polygons corresponding to the element "A" and element "B" intersect with the drawing start line, the YSU 19 proceeds to step S86 in which the ranking between the element "A" and element "B" is not determined by comparing the minimum Y-coordinates but determined by comparing the depth values (the sort rule 3).

In this case, the member "Depth" (refer to Fig. 13 and Fig. 15) is available in the polygon structure, and the ranking is determined on the basis of the magnitude relation of this value. The similar process is applicable for sprites, such that the ranking is determined on the basis of the magnitude relation of the member "Depth" of the sprite structure (refer to Fig. 16). While the number of bits of the member "Depth" differs among the polygon structure, the sprite structure when scissoring is enabled and the sprite structure when scissoring is disabled, the YSU 19 compares always structure instances of the same format so that it is possible to determine the magnitude relation only by simply comparing the values of the member "Depth".

In step S87 following step S86, if the YSU 19 determines as the result of comparison that the depth value of the element "A" is greater than or equal to the depth value of the element "B", the process proceeds to step S88 in which it is determined that the element "A" has a higher rank, and the rank comparison process is terminated. Conversely, if the YSU 19 determines as the result of comparison that the depth value of the element "A" is smaller than the depth value of the element "B", the process proceeds to step S89 in which it is determined that the element "B" has a higher rank, and the rank comparison process is terminated.

On the other hand, if the YSU 19 determines in step S85 that both the minimum Y-coordinates of the element "A" and element "B" are greater than the Y-coordinate of the drawing start line, the process proceeds to step S90 in which the minimum Y-coordinates of them are compared with each other. However, in the case of the rank comparison process in an interlaced scan mode, the comparison process is performed on the assumption that the value of the minimum Y-coordinate on the line to be drawn of the current field is equal to the value of the minimum Y-coordinate which is smaller by one and located on the line in the previous field (the sort rule 4). On the other hand, in the rank comparison process in a non-interlaced scan mode, it is simply determined which minimum Y-coordinate is greater by comparison.

Then, if the YSU 19 determines in step S91 that the minimum Y-coordinates of the element "A" and element "B" are equal to each other, the process proceeds to step S86 in which the ranking between the element "A" and element "B" is determined by comparing the depth values (the sort rule 2). On the other hand, if the YSU 19 determines in step S91 that the minimum Y-coordinates of the element "A" and element "B" are different from each other, the process proceeds to step S92.

If the YSU 19 determines in step S92 that the minimum Y-coordinate of the element "A" is smaller than the minimum Y-coordinate of the element "B", the process proceeds to step S93 in which it is determined that the rank of the element "A" is higher, and the rank comparison process is terminated (the sort rule 1). On the other hand, if the YSU 19 determines that the minimum Y-coordinate of the element "A" is greater than or equal to the minimum Y-coordinate of the element "B", the process proceeds to step S94 in which it is determined that the rank of the element "B" is higher, and the rank comparison process is terminated (the sort rule 1).

Meanwhile, while the Y sort operation for the polygon structure array is explained as an example in Fig. 24 to Fig. 27, the similar process is performed for the Y sort operation for the sprite structure array.

By the way, as has been discussed above, in the case of the present embodiment, the structure instances provided respectively for the graphic elements (polygons, sprites) are rearranged (sorted) in order that the graphic elements are arranged in ascending order (from a smaller one to a larger one) of the minimum Y-coordinates, i.e., in the order that the graphic elements appear. Also, a structure instance having been used for drawing is saved in the recycle buffer and reused until the Y-coordinate of the line to be drawn exceeds the maximum Y-coordinate of the structure instance (the maximum Y-coordinate among the Y-coordinates of the three vertices in the case where the structure instance is of a polygon, or the maximum Y-coordinate among the Y-coordinates of the four vertices in the case where the structure instance is of a sprite).

Accordingly, since the structure instances after the sort operation can be simply successively read for the drawing process, it is no longer necessary to search all the structure instances for the structure instance to be drawn so that the process can be speeded up. As a result, a high capacity buffer for storing one or more frames of image data (such as a frame buffer) is not necessarily used, but it is possible to display three-dimensional images by combining a number of graphic elements even if only a smaller capacity buffer (such as a line buffer, or a pixel buffer for drawing pixels short of one line) is implemented.

In accordance with the ordinary technique, when the drawing process is performed in a line buffer or a pixel buffer, all the structure instances must be searched for the structure instance to be drawn every time one line or a predetermined number of pixels is drawn. However, in the case of the present embodiment, since the sort operation is performed in advance by the YSU 19 in ascending order of the minimum Y-coordinates (i.e., in the order that the graphic elements appear), the search operation can be dispensed with. In addition to this, if the search operation is performed, it is difficult to display three-dimensional images by combining a number of graphic elements. Incidentally, in the case where a frame buffer is used, the image data of one frame can be stored so that the search operation is not needed but the drawing process is performed simply from the element having a larger depth value.

Also, in the case of the present embodiment, if a structure instance can be reused for writing new pixel information to the line buffer LB1 or LB2 (for drawing new pixels), the structure instance is stored in the recycle buffer 110. Because of this, the same structure instance need not repeatedly be read from the main RAM 25 storing all the structure instances as sorted every time new pixels are drawn by the use of the same structure instance, so that the process can be speeded up.

In addition to this, the depth comparator 112 is provided for determining the drawing order between the structure instance stored in the recycle buffer 110 for reuse and the structure instance which is read anew in the order as sorted by the YSU 19 (i.e., the order of drawing the pixels corresponding to these structure instances). Because of this, the structure instances which can be reused are stored in the recycle buffer 110 in appropriate drawing order (i.e., in the order that one having the largest depth value is arranged at the top) only by storing, in order, the structure instance which can be reused after the determination process in the recycle buffer 110. As has been discussed above, while the structure instances which can be reused are stored in the recycle buffer 110 in appropriate order, these structure instances are checked again to determine the order of drawing together with the structure instance which is read anew in the order as sorted by the YSU 19, and therefore it is always possible to draw the structure instances in appropriate drawing order (i.e., in descending order of the depth values).

Furthermore, in the case of the present embodiment, when a plurality of graphic elements are displayed while the minimum Y-coordinates of the plurality of graphic elements are equal, the sort rule 2 is applied in order that the structure instances are arranged on each line of the screen in descending order of the depth values (from a larger value to a smaller value). Accordingly, the graphic elements corresponding to structure instances are drawn on each line in descending order of the depth values.

In this case, if the structure instances are sorted in ascending order of the minimum Y-coordinates (the sort rule 1) and the structure instances having the same minimum Y-coordinate are sorted in descending order of the depth values (the sort rule 2), that is, if only the sort rules 1 and 2 are used, it is not always guaranteed that the drawing process is performed in descending order of the depth values on the top line of the display.

However, in the case of the present embodiment, when there are a plurality of graphic elements including the pixels to be displayed on the top line of the screen, the sort rule 3 is applied in order that the structure instances are arranged in descending order of the depth values irrespective of the minimum Y-coordinates, i.e., on the assumption that the minimum Y-coordinates are the same. Accordingly, even on the top line, the graphic elements corresponding to the structure instances are drawn in descending order of the depth values.

As a result, on every line, the graphic elements are drawn always in descending order of the depth values, and thereby the translucent composition process can be appropriately performed. This is because the pixel drawing color of a translucent graphic element depends on the pixel drawing color of the graphic element located behind the translucent graphic element, so that the graphic elements must be drawn from the deeper position.

Furthermore, the prefetch buffer 108 is provided in the case of the present embodiment, and this prefetch buffer 108 serves as a buffer mechanism between the timing of inputting the structure instances in the order as sorted by the YSU 19 and the timing of outputting the structure instances to the depth comparator 112. By this mechanism, it is possible to shorten the waiting time of the RPU 9 for the structure instances which are input in the order as sorted by the YSU 19.

Furthermore, since the line buffers LB1 and LB2 are implemented in the case of the present embodiment, it is possible to reduce the cost lower than as needed when a frame buffer is used, and realize the drawing process in a circuit configuration which is simpler (controlled in a simpler manner) than as required when a pixel buffer is used for storing pixel data corresponding to the number of pixels which is smaller than the number of pixels on one line.

Furthermore, since the polygon structure instances and the sprite structure instances are separately sorted in the case of the present embodiment, even in the case where the format and the size are different between the polygon structure instance and the sprite structure instance, it is possible to easily perform the sort operation, and the utilization efficiency of the memory area for storing structure instances can be improved.

Even if the polygon structure instances and the sprite structure instances are separately sorted as described above, the drawing process can be correctly performed by providing the merge sorter 106 which merge sorts the polygon structure instance group and the sprite structure instance group in advance of the drawing process.

Furthermore, the present embodiment can support not only non-interlaced scanning but also interlaced scanning. More specific description is as follows.

In the case where an image is displayed by interlaced scanning, a structure instance whose minimum Y-coordinate corresponds to the line which is skipped by the interlaced scanning and a structure instance whose minimum Y-coordinate corresponds to the line to be drawn are read together during the process of drawing the line to be displayed. Accordingly, even in the case of interlaced scanning, by regarding the minimum Y-coordinates of these structure instances to be equal and performing the sort operation in descending order of the depth values, it is guaranteed that the drawing process is performed in descending order of the depth values. Because of this, the sort rule 4 is provided for performing different sort operations for displaying odd and even fields.

As a result, not only in the case of non-interlaced scanning but also in the case of interlaced scanning, the drawing process is performed in descending order of the depth values, and thereby an appropriate translucent composition process can be realized.

Furthermore, in the case of the present embodiment, each time a structure instance is fixed one after another from the highest rank in the sorting, the YSU 19 outputs the pulse PPL or SPL to the RPU 9. Because of this, the YSU 9 can read a structure instance one after another without waiting for the completion of the sort operation of all the structure instances. Furthermore, by starting the sort operation of the respective structure instances for the field being displayed in the previous vertical blanking period or during displaying this field, it is possible to secure a sufficient time in which the arithmetic operation before the sort operation can be performed with time to spare.

Particularly, in the above mode 2, since the sort operation is started just after entering the vertical blanking period, it is possible to secure a sufficient time in which the arithmetic operation before the sort operation can be performed with time to spare (refer to Fig. 9(a)).

Furthermore, in the case of the present embodiment, since the sorting technique implemented in the YSU 19 is heap sort such that the structure instances are fixed one after another as the sort results, it is easy to realize the mechanism of outputting the pulse PPL or SPL each time a structure instance is fixed as a sort result. In addition, it is possible to reduce the fluctuation in the time required for performing the sort operation of all the structure instances.

Furthermore, in the case of the present embodiment, the coordinates to be used are minimum Y-coordinates when the sort rules 1 to 4 are used. Because of this, since all the graphic elements can be sorted in the same condition, the drawing process can be performed in an appropriate drawing order.

Meanwhile, the present invention is not limited to the above embodiments, and a variety of variations and modifications may be effected without departing from the spirit and scope thereof, as described in the following exemplary modifications.

(1) In accordance with the above description, since the translucent composition process is performed by the color blender 132, the graphic elements (polygons, sprites) are drawn on each line in descending order of the depth values. However, in the case where the translucent composition process is not performed, it is preferred to perform the drawing process in ascending order of the depth values. This is because, even if all the graphic elements to be drawn on one line are completely not drawn before displaying them, for example, for the reason that the drawing capability is insufficient or that there are too many graphic elements to be drawn on one line, the image as displayed looks not so bad when drawing first the graphic element having a smaller depth value and to be displayed in a more front position as compared with the image when drawing first the graphic element having a larger depth value and to be drawn in a deeper position. Also, by drawing first the graphic element having a smaller depth value, it is possible to increase the processing speed because the graphic element to be drawn in a deeper position need not be drawn in an area where it overlaps the graphic element having already been drawn.

(2) In accordance with the above description, the line buffers LB1 and LB2 capable of storing data corresponding to one line of the screen are provided in the RPU 9 for the drawing process. However, two pixel buffers each of which is capable of storing data corresponding to the number of pixels short of one line can be provided in the RPU 9. Alternatively, it is also possible to provide two buffers each of which is capable of storing data of "K" lines ("K" is two or a larger integer) in the RPU 9.

(3) While a double buffering configuration is employed in the RPU 9 in accordance with the above description, it is possible to employ a single buffering configuration or a multiple buffering configuration making use of three or more buffers.

(4) While the storage capacity of the prefetch buffer 108 is equal to the storage capacity of the recycle buffer 110 in accordance with the above description, these storage capacities can be made different.

(5) While the YSU 19 outputs the pulse PPL each time a polygon structure instance is fixed as a sort result in accordance with the above description, it is possible to output the pulse PPL each time a predetermined number of polygon structure instances are fixed as sort results. This is true for the pulse SPL.

(6) While an indirect designation method making use of a color palette is employed for the color designation in texture data in accordance with the above description, a direct designation method can be employed to directly designate the color of each texel.

While the present invention has been described in terms of embodiments, those skilled in the art will recognize that the invention is not limited to the embodiments described. The present invention can be practiced with modification and alteration within the spirit and scope of the appended claims. The description is thus to be regarded as illustrative instead of limiting in any way on the present invention.

**Claims**

1. A drawing apparatus operable to display a screen image composed of a combination of graphic elements on a screen formed by arranging a plurality of parallel lines in a direction perpendicular to the parallel lines, each of which consists of a plurality of pixels, on the basis of display information items provided respectively for graphic elements including polygonal graphic elements, said drawing apparatus comprising:

a sorting unit operable to rearrange the display information items provided respectively for the graphic elements in order that coordinates contained in the display information items and indicative of the positions of the graphic elements in the direction normal to the line are arranged in either descending order or ascending order; and

a drawing unit operable to sequentially read the display information items rearranged by said sorting unit and perform the drawing process of the graphic elements on the basis of the display information items corresponding thereto.

**2.** The drawing apparatus as claimed in claim 1 wherein said drawing unit including:

a first buffer capable of storing pixel information corresponding to a first predetermined number of pixels of the pixels forming the screen, and operable to output the pixel information for the purpose of displaying the screen image, and store new pixel information for displaying the screen image in the location used for storing the pixel information as output;

a second buffer capable of storing the display information items corresponding to a second predetermined number of the graphic elements, and operable to store the display information items in the order that they are transferred for reuse when the display information items can be reused for the purpose of storing other pixel information on the basis of the display information items in said first buffer after the pixel information on the basis of the display information items is stored in said first buffer, and output the display information items in the order as stored if it arrives when the new pixel information is stored in said first buffer.

a comparing unit operable to compare display depth information item contained in, among the display information items which are read in the order as rearranged by said sorting unit, the display information item for generating the new pixel information if it arrives when the new pixel information is stored in said first buffer and display depth information item contained in the display information item as output from said second buffer, and select and output first either of the display information items on the basis of a predetermined rule; and

a writing unit operable to generate the pixel information on the basis of the display information item as output from said comparing unit and write the pixel information as generated to said first buffer as the new pixel information.

**3.** The drawing apparatus as claimed in claim 1 wherein when a plurality of the graphic elements are displayed and the coordinates of the plurality of the graphic elements are equal, said sorting unit arranges the display information items corresponding to the plurality of the graphic elements in either ascending order or descending order of the depth values indicated by the display depth information items which are contained in the display information items.

**4.** The drawing apparatus as claimed in claim 3 wherein when a plurality of the graphic elements respectively include pixels to be displayed on the top line of the screen, said sorting unit arranges the display information items corresponding to the plurality of these graphic elements in either ascending order or descending order of the depth values irrespective of the magnitude relation of the coordinates.

**5.** A drawing apparatus operable to display a screen image composed of a combination of graphic elements by interlaced scanning on a screen formed by arranging a plurality of parallel lines in a direction perpendicular to the parallel lines, each of which consists of a plurality of pixels, on the basis of display information items provided respectively for graphic elements including polygonal graphic elements, said drawing apparatus comprising:

a sorting unit operable to rearrange the display information items provided respectively for the graphic elements on the basis of a first rule in order to display an even field, and rearrange the display information items provided respectively for the graphic elements on the basis of a second rule in order to display an odd field; and

a drawing unit operable to sequentially read, when the odd field is displayed, the display information items rearranged by said sorting unit for displaying the odd field and perform the drawing process of the graphic elements on the basis of the display information items corresponding thereto, and sequentially read, when the even field is displayed, the display information items rearranged by said sorting unit for displaying the even field and perform the drawing process of the graphic elements on the basis of the display information items corresponding thereto,

wherein the first rule is such that, when the display information items provided respectively for the graphic elements are rearranged in order that coordinates contained in the display information items and indicative of the positions of the graphic elements in the direction normal to the line are arranged in either descending order or ascending order, if the coordinates of the graphic elements correspond to an odd line to be scanned and the even line followed by the odd line, the display information items are arranged in either descending order or ascending order of the depth values indicated by the display depth information items which are contained in the display information items on the assumption that the coordinates of the graphic elements are equal, and

wherein the second rule is such that, when the display information items provided respectively for the graphic elements are rearranged in order that the coordinates contained in the display information items are arranged in either descending order or ascending order, if the coordinates of the graphic elements correspond to an even line to be scanned and the odd line followed by the even line, the display information items are arranged in either descending order or ascending order of the depth values indicated by the display depth information items which are contained in the display information items on the assumption that the coordinates of the graphic elements are equal.

6. The drawing apparatus as claimed in claim 5 wherein said drawing unit including:

a first buffer capable of storing pixel information corresponding to a first predetermined number of pixels of the pixels forming the screen, and operable to output the pixel information as stored for the purpose of displaying the screen image, and store new pixel information for displaying the screen image in the location used for storing the pixel information as output;

a second buffer capable of storing the display information items corresponding to a second predetermined number of the graphic elements, and operable to store the display information items in the order that they are transferred for reuse when the display information items can be reused for the purpose of storing other pixel information on the basis of the display information items in said first buffer after the pixel information on the basis of the display information items are stored in said first buffer, and output the display information items in the order as stored if it arrives when the new pixel information is stored in said first buffer;

a comparing unit operable when the odd field is displayed to compare display depth information item contained in, among the display information items which are read in the order as rearranged by said sorting unit for displaying the odd field, the display information item for generating the new pixel information if it arrives when the new pixel information is stored in said first buffer and display depth information item contained in the display information item as output from said second buffer, and select and output first either of the display information items on the basis of a predetermined rule, and operable when the even field is displayed to compare display depth information item contained in, among the display information items which are read in the order as rearranged by said sorting unit for displaying the even field, the display information item for generating the new pixel information if it arrives when the new pixel information is stored in said first buffer and display depth information item contained in the display information item as output from said second buffer, and select and output first either of the display information items on the basis of the predetermined rule, and

a writing unit operable to generate the pixel information on the basis of the display information item as output from said comparing unit and write the pixel information as generated to said first buffer as the new pixel information.

7. The drawing apparatus as claimed in claim 5 wherein when a plurality of the graphic elements respectively include pixels to be displayed on the top line of the screen, said sorting unit does not apply the first rule and the second rule, and arranges the display information items corresponding to the plurality of these graphic elements in either ascending order or descending order of the depth values.

8. The drawing apparatus as claimed in claim 1 wherein, each time the rearrangement of display information items provided respectively for a predetermined number of the graphic elements is completed, said sorting unit notifies the completion to said drawing unit, and

wherein said drawing unit receives the notification from said sorting unit, and sequentially reads the display information items which have been rearranged.

9. The drawing apparatus as claimed in claim 5 wherein, each time the rearrangement of display information items provided respectively for a predetermined number of the graphic elements is completed, said sorting unit notifies the completion to said drawing unit, wherein the rearrangement required for displaying the odd field is started just after entering the vertical blanking period which is inserted just before displaying the odd field, and wherein the rearrangement required for displaying the even field is started just after entering the vertical blanking period which is inserted just before displaying the even field.

10. The drawing apparatus as claimed in claim 8 wherein the predetermined number is a single.

11. The drawing apparatus as claimed in claim 2 wherein said drawing unit further including:

a third buffer capable of storing the display information items corresponding to a third predetermined number of the graphic elements, and operable to store the display information items, which are read in the order as rearranged by said sorting unit, in the order as read, and outputs, in the order as stored, the display information item for generating the new pixel information if it arrives when the new pixel information is stored in said first buffer, and

wherein said comparing unit compares the display depth information item contained in the display information item as output from said third buffer and the display depth information item contained in the display information item as stored in the order that they are transferred for reuse and output from said second buffer, and select and output first either of the display information items on the basis of the predetermined rule.

12. The drawing apparatus as claimed in claim 2 wherein said predetermined rule is such that, as a result of the comparison, the display information item containing the display depth information item indicative of the larger display depth value is selected.

13. The drawing apparatus as claimed in claim 1 wherein the coordinates of the graphic elements which are used when said sorting unit performs the rearrangement operation are the coordinates of vertices of the graphic elements, and are either the maximum coordinates or the minimum coordinates.

14. The drawing apparatus as claimed in claim 1 wherein said first buffer is a buffer which stores a plurality items of the pixel information of which at least one of the lines is made.

15. The drawing apparatus as claimed in claim 1 wherein the display information items are rearranged by said sorting unit on the basis of heap sort.

16. The drawing apparatus as claimed in claim 1 wherein said sorting unit separately performs the rearrangement operation of the display information items for displaying polygons as the graphic elements and the rearrangement operation of the display information items for displaying sprites as the graphic elements.

17. The drawing apparatus as claimed in claim 16 wherein said drawing unit further including:

    a merge sort unit operable to merge sort the display information items for the polygons rearranged by said sorting unit and the display information items for the sprites rearranged by said sorting unit in accordance with the rule of the rearrangement operation by said sorting unit.

18. A drawing method of displaying a screen image composed of a combination of graphic elements on a screen formed by arranging a plurality of parallel lines in a direction perpendicular to the parallel lines, each of which consists of a plurality of pixels, on the basis of display information items provided respectively for graphic elements including polygonal graphic elements, said drawing method comprising:

    a sorting step of rearranging the display information items provided respectively for the graphic elements in order that coordinates contained in the display information items and indicative of the positions of the graphic elements in the direction normal to the line are arranged in either descending order or ascending order; and
    a drawing step of sequentially reading the display information items rearranged by said sorting step and performing the drawing process of the graphic elements on the basis of the display information items corresponding thereto.

19. The drawing method as claimed in claim 18 wherein said drawing step including:

    storing the display information items, in a second buffer capable of storing the display information items corresponding to a second predetermined number of the graphic elements, in the order that they are transferred for reuse when the display information items can be reused for the purpose of storing other pixel information on the basis of the display information items in a first buffer capable of storing pixel information corresponding to a first predetermined number of pixels of the pixels forming the screen after the pixel information on the basis of the display information items are stored in said first buffer;
    outputting the display information items from said second buffer in the order as stored if it arrives when new pixel information, which is to be stored anew after the pixel information as stored in said first buffer is output for displaying the screen image, is stored in said first buffer; and
    comparing display depth information item contained in, among the display information items which are read in the order as rearranged in said sorting step, the display information item for generating the new pixel information if it arrives when the new pixel information is stored in said first buffer and display depth information item contained in the display information item as output from said second buffer, and select and output first either of the display information items on the basis of a predetermined rule; and
    generating the pixel information on the basis of the display information item as output in said comparing step and writing the pixel information as generated to said first buffer as the new pixel information.

20. The drawing method as claimed in claim 18 wherein when a plurality of the graphic elements are displayed and the coordinates of the plurality of the graphic elements are equal, in said sorting step, the display information items corresponding to the plurality of the graphic elements are arranged in either ascending order or descending order of the depth values indicated by the display depth information items which are contained in the display information items.

21. The drawing method as claimed in claim 20 wherein when a plurality of the graphic elements respectively include pixels to be displayed on the top line of the screen, in said sorting step, the display information items corresponding to the plurality of these graphic elements are arranged in either ascending order or descending order of the depth values irrespective of the magnitude relation of the coordinates.

22. A drawing method of displaying a screen image composed of a combination of graphic elements by interlaced scanning on a screen formed by arranging a plurality of parallel lines in a direction perpendicular to the parallel lines, each of which consists of a plurality of pixels, on the basis of display information items provided respectively for graphic elements including polygonal graphic elements, said drawing method comprising:

a sorting step of rearranging the display information items provided respectively for the graphic elements on the basis of a first rule in order to display an even field;
a sorting step of rearranging the display information items provided respectively for the graphic elements on the basis of a second rule in order to display an odd field;
a drawing step of, when the odd field is displayed, sequentially reading the display information items rearranged in said sorting step for displaying the odd field and perform the drawing process of the graphic elements on the basis of the display information items corresponding thereto; and
a drawing step of, when the even field is displayed, sequentially reading the display information items rearranged in said sorting step for displaying the even field and perform the drawing process of the graphic elements on the basis of the display information items corresponding thereto,

wherein the first rule is such that, when the display information items provided respectively for the graphic elements are rearranged in order that coordinates contained in the display information items and indicative of the positions of the graphic elements in the direction normal to the line are arranged in either descending order or ascending order, if the coordinates of the graphic elements correspond to an odd line to be scanned and the even line followed by the odd line, the display information items are arranged in either descending order or ascending order of the depth values indicated by the display depth information items which are contained in the display information items on the assumption that the coordinates of the graphic elements are equal, and
wherein the second rule is such that, when the display information items provided respectively for the graphic elements are rearranged in order that the coordinates contained in the display information items are arranged in either descending order or ascending order, if the coordinates of the graphic elements correspond to an even line to be scanned and the odd line followed by the even line, the display information items are arranged in either descending order or ascending order of the depth values indicated by the display depth information items which are contained in the display information items on the assumption that the coordinates of the graphic elements are equal.

23. The drawing method as claimed in claim 22 wherein each of said drawing steps including:

storing the display information items, in a second buffer capable of storing the display information items corresponding to a second predetermined number of the graphic elements, in the order that they are transferred for reuse when the display information items can be reused for the purpose of storing other pixel information on the basis of the display information items in a first buffer capable of storing pixel information corresponding to a first predetermined number of pixels of the pixels forming the screen after the pixel information on the basis of the display information items are stored in said first buffer; and
outputting the display information items from said second buffer in the order as stored if it arrives when new pixel information, which is to be stored anew after the pixel information as stored in the first buffer is output for displaying the screen image, is stored in said first buffer,

wherein said drawing step for drawing the odd field further including:

comparing the display depth information item contained in, among the display information items which are read in the order as rearranged in said sorting step for displaying the odd field, the display information item for generating the new pixel information if it arrives when the new pixel information is stored in said first buffer and the display depth information item contained in the display information item as output from said second buffer, and select and output first either of the display information items on the basis of a predetermined rule; and

generating the pixel information on the basis of the display information item as output in said comparing step for displaying the odd field and writing the pixel information as generated to said first buffer as the new pixel information,

wherein said drawing step for drawing the even field further including:

comparing the display depth information item contained in, among the display information items which are read in the order as rearranged in said sorting step for displaying the even field, the display information item for generating the new pixel information if it arrives when the new pixel information is stored in said first buffer and the display depth information item contained in the display information item as output from said second buffer, and select and output first either of the display information items on the basis of the predetermined rule; and

generating the pixel information on the basis of the display information item as output in said comparing step for displaying the even field and writing the pixel information as generated to said first buffer as the new pixel information.

24. The drawing method as claimed in claim 22 wherein when a plurality of the graphic elements respectively include pixels to be displayed on the top line of the screen, the first rule is not applied in said sorting step for displaying the odd field and the second rule is not applied in said sorting step for displaying the even field, and wherein in each of said sorting steps the display information items corresponding to the plurality of these graphic elements are arranged in either ascending order or descending order of the depth values.

25. The drawing method as claimed in claim 18 wherein, each time the rearrangement of a predetermined number of the graphic elements is completed, the completion is notified in said sorting step, and
wherein, in response to the notification in said sorting steps, the display information items which have been rearranged are sequentially read in said drawing step.

26. The drawing method as claimed in claim 22 wherein, each time the rearrangement of a predetermined number of the graphic elements is completed, the completion is notified in each of said sorting steps, and
wherein, in response to the notification in said sorting steps, the display information items which have been rearranged are sequentially read in each of said drawing steps,
wherein, in said sorting step for displaying the odd field, the rearrangement is started just after entering the vertical blanking period which is inserted just before displaying the odd field, and
wherein, in said sorting step for displaying the even field, the rearrangement is started just after entering the vertical blanking period which is inserted just before displaying the even field.

27. The drawing method as claimed in claim 25 wherein t the predetermined number is a single.

28. The drawing method as claimed in claim 19 wherein said drawing step further including:

storing the display information items, which are read in the order as rearranged by said sorting step, in the order as read in a third buffer capable of storing the display information items corresponding to a third predetermined number of the graphic elements;

outputting, in the order as stored, the display information item for generating the new pixel information from the third buffer if it arrives when the new pixel information is stored in said first buffer, and

wherein, in said comparing step, the display depth information item contained in the display information item as output from said third buffer is compared with the display depth information item contained in the display information item as stored in the order that they are transferred for reuse and output from said second buffer, and either of the display information items is selected and first output on the basis of the predetermined rule.

29. The drawing method as claimed in claim 19 wherein said predetermined rule is such that, as a result of the comparison, the display information item containing the display depth information item indicative of the larger display depth value is selected.

30. The drawing method as claimed in claim 18 wherein the coordinates of the graphic elements which are used when the rearrangement operation is performed in said sorting step are the coordinates of vertices of the graphic elements, and are either the maximum coordinates or the minimum coordinates.

31. The drawing method as claimed in claim 18 wherein said first buffer is a buffer which stores a plurality items of the pixel information of which at least one of the lines is made.

32. The drawing method as claimed in claim 18 wherein, in said sorting step, the display information item are rearranged in said sorting step on the basis of heap sort.

33. The drawing method as claimed in claim 18 wherein the rearrangement operation of the display information items for displaying polygons as the graphic elements and the rearrangement operation of the display information items for displaying sprites as the graphic elements are separately performed in the sorting step.

34. The drawing method as claimed in claim 33 wherein said drawing step further including:

merge sorting the display information items for the polygons rearranged in said sorting step and the display information items for the sprites rearranged by said sorting step in accordance with the rule of the rearrangement operation in said sorting step.

# Fig. 1

(a)

(b)

| Before Sorting | | After Sorting |
|:---:|:---:|:---:|
| #0 | | #3 |
| #1 | | #2 |
| #2 | | #4 |
| #3 | | #0 |
| #4 | | #5 |
| #5 | | #7 |
| #6 | | #1 |
| #7 | | #6 |

# Fig. 2

(a)

(b)

| Before Sorting | After Sorting |
|---|---|
| #0 (Z=3) | #3 (Z=2) |
| #1 (Z=4) | #1 (Z=4) |
| #2 (Z=4) | #0 (Z=3) |
| #3 (Z=2) | #7 (Z=2) |
| #4 (Z=2) | #2 (Z=4) |
| #5 (Z=3) | #5 (Z=3) |
| #6 (Z=4) | #4 (Z=2) |
| #7 (Z=2) | #6 (Z=4) |

# Fig. 3

(a)

X

#7

#2

3 | 5 | 4 ← Top Line

#5

#0

4

3

#6

3

#3

Y

4

5 | 4

#4

#1

SCR

(b)

**Before Sorting**

| #0 (Z=3) |
| #1 (Z=4) |
| #2 (Z=4) |
| #3 (Z=3) |
| #4 (Z=5) |
| #5 (Z=3) |
| #6 (Z=4) |
| #7 (Z=5) |

**After Sorting**

| #7 (Z=5) |
| #2 (Z=4) |
| #5 (Z=3) |
| #6 (Z=4) |
| #3 (Z=3) |
| #0 (Z=3) |
| #1 (Z=4) |
| #4 (Z=5) |

# Fig. 4

Prefetch Buffer 108

Recycle Buffer 110

Depth Comparator 112

# Fig. 5

(a)

After Sorting

(b)

| |
|---|
| #0 (Z=4) |
| #3 (Z=2) |
| #1 (Z=5) |
| #2 (Z=2) |
| #4 (Z=4) |
| #7 (Z=5) |
| #6 (Z=6) |
| #5 (Z=4) |

Fig. 6

Fig. 7

# Fig. 8

# Fig. 9

(a)

| Calculation B | | Calculation A | | Calculation B | |

| | Sort B | | Sort A | | Sort B |

| | Odd Field A | | Even Field B | | Odd Field A | | B |

→ t

Vertical Blanking    Vertical Blanking    Vertical Blanking    Vertical Blanking

(b)

| Calculation B | | Calculation A | | Calculation B | | Calculation A |

| Sort A | | Sort B | | Sort A | | Sort B |

| | Odd Field A | | Even Field B | | Odd Field A | | B |

→ t

Vertical Blanking    Vertical Blanking    Vertical Blanking    Vertical Blanking

# Fig. 10

External Memory — 50

51 — External Bus

External Memory Interface — 3

DMAC — 4

— 1

23

5 — CPU

7 — CPU Local RAM

9 — RPU

29 — Video DAC → Video Output

11 — Color Palette RAM

25

13 — SPU

31 — Audio DAC Block → Audio Output

Main RAM

Main RAM Access Arbiter

15 — SPU Local RAM

17 — GE

I/O Bus

19 — YSU

27

21 — External Interface Block

33 — ADC

52 — Analog Input Device

Peripheral Device — 54

```
┌─────────────────────────────────────┐
│ •Calculate Parameters Of Expansion, │
│ Reduction, Rotation And Parallel     │
│ Displacement Of Objects And Sprites  │
│ •Generate Transformation Matrices    │──── S1
│ •Update Eye Coordinates, Target Point│
│ Coordinates And View Vector          │
└─────────────────────────────────────┘
                  │
                  ▼
┌─────────────────────────────────────┐
│ •Combination  Of  Transformation     │
│ Matrices (Calculation Of Matrix      │──── S2
│ Products)                            │
└─────────────────────────────────────┘
                  │
                  ▼
┌─────────────────────────────────────┐
│ •Geometric Transformation            │
│                                      │──── S3
│ •Lighting                            │
└─────────────────────────────────────┘
                  │
                  ▼
┌─────────────────────────────────────┐
│ •Sort Polygon Structure Instances And│
│ Sprite Structure Instances           │──── S4
└─────────────────────────────────────┘
                  │
                  ▼
┌─────────────────────────────────────┐
│ •Rasterizing                         │
│ •Scissoring                          │──── S5
│ •Color Blending                      │
└─────────────────────────────────────┘
                  │
                  ▼
┌─────────────────────────────────────┐
│ •Generation Of Video Signal          │──── S6
└─────────────────────────────────────┘
```

Fig. 11

## Fig. 12

Main RAM Access Arbiter 23

RPU Main RAM Access Arbiter — 100

PPL → Polygon Prefetcher — 102

SPL → Sprite Prefetcher — 104

Merge Sorter — 106

Prefetch Buffer — 108

Recycle Buffer — 110

Depth Comparator — 112

Polygon Data → Vertex Sorter — 114

Sprite Data → Vertex Expander — 116

Slicer — 118

Pixel Stepper — 120

Gouraud Shading Polygon Data

Pixel Dither — 122

Texture Mapping Polygon Data · Sprite

Texel Mapper — 124

Texture Cache Block — 126

Color Palette RAM — 11

Bi-Liner Filter — 130

Color Blender — 132

Memory Manager — 140

142

External Memory Interface 3

Line Buffer Block — 134

Line Buffer — LB1

Line Buffer — LB2

138

Video Encoder — 136

Video DAC 29

EP 1 847 965 A1

## Fig. 13

Cw(8 bits)

Fig. 14

Fig. 15

# Fig. 16

Address
Offset

Tattribute (Lower 2 bits)

Filter (1 bits)

+0

+4

# Fig. 17

(X0, Y0, VR0, WG0, UB0)

(X1, Y1, VR1, WG1, UB1)

Start Point
(Xs, Ys, Rs, Gs, Bs)

· Xg

Drawing Line

End Point
(Xe, Ye, Re, Ge, Be)

(X2, Y2, VR2, WG2, UB2)

# Fig. 18

(X0, Y0, UB0, VR0, WG0)

(X1, Y1, UB1, VR1, WG1)

Start Point
(Xs, Ys, Us, Vs, Ws)

· Xt

Drawing Line

End Point
(Xe, Ye, Ue, Ve, We)

(X2, Y2, UB2, VR2, WG2)

# Fig. 19

(X0, Y0, UB0, VR0)　　　　　(X1, Y1, UB1, VR1)

Start Point
(Xs, Ys, Us, Vs)

・Xs →

End Point
(Xe, Ye, Ue, Ve)

Drawing Line

(X2, Y2, UB2, VR2)　　　　(X3, Y3, UB3, VR3)

# Fig. 20

|  | X Coordinate LSB = 0 | X Coordinate LSB = 1 |
|---|---|---|
| Y Coordinate LSB = 0 | Pattern 00 | Pattern 01 |
| Y Coordinate LSB = 1 | Pattern 10 | Pattern 11 |

# Fig. 21

Fig. 22

## Fig. 23

(a) Main RAM — (b) Main RAM

Swap Element Values

Smaller Address — Larger Address

**Fig. 24**

```
           ( Start Y Sort Operation )
                      │
                      ▼
   ┌──────────────────────────────────────┐
   │ Set Initial Address Of Array To The Value │
   │ Of "Polygon_Array_YSU_Base_Address"  │      S20
   │ Of YSU Control Register, And Set The │
   │ Number "s" Of Array Elements To The  │
   │ Value Of "Number_of_Sorted_Polygons" │
   │ Of YSU Control Register              │
   └──────────────────────────────────────┘
                      │
                      ▼
   ┌──────────────────────────────────────┐
   │        Heap Building Process         │      S21
   └──────────────────────────────────────┘
                      │
                      ▼
   ┌──────────────────────────────────────┐
   │               i = 0                  │      S22
   └──────────────────────────────────────┘
                      │
                      ▼
   ┌──────────────────────────────────────┐
   │ Swap The Value Of Element [0] And    │      S23
   │ The Value Of Element [s − 1]         │
   └──────────────────────────────────────┘
                      │
                      ▼
   ┌──────────────────────────────────────┐
   │        Output Pulse Signal PPL       │      S24
   └──────────────────────────────────────┘
                      │
                      ▼
   ┌──────────────────────────────────────┐
   │             i = i + 1                │      S25
   └──────────────────────────────────────┘
                      │
                      ▼
                    S26
                  ◇ i = s − 1 ?  ─── Y ───┐
                      │                    │
                      N                    ▼          S28
                      │          ┌──────────────────────┐
                      ▼          │ Output Pulse Signal PPL │
        S27                      └──────────────────────┘
   ┌──────────────────────────┐             │
   │ Perform Down Heap Process With │       ▼
   │ The Heap Structure Whose  │   ( Terminate Y Sort Operation )
   │ Number Of Elements Is "s − i" │
   │ From The Element [s − 1] As │
   │         Parent            │
   └──────────────────────────┘
```

# Fig. 25

```
        ┌──────────────────────────────┐
        │   Start Heap Building Process │
        └──────────────────────────────┘
                       │
                       ▼
        ┌──────────────────────────────┐
        │            j = 0              │        S40
        └──────────────────────────────┘
                       │
                       ▼
        ┌──────────────────────────────┐
        │  Determine Element [p] As The Parent │   S41
        │         Of Element [j]        │
        └──────────────────────────────┘
                       │
                       ▼
        ┌──────────────────────────────┐
        │ Perform Down Heap Process With The Heap │  S42
        │ Structure Whose Number Of Elements Is "s" │
        │ From The Element [p] Determined As Parent │
        └──────────────────────────────┘
                       │
                       ▼
        ┌──────────────────────────────┐
        │          j = j + 1           │        S43
        └──────────────────────────────┘
                       │
                       ▼
              ◇ j = s − 1 ?  ◇───── N            S44
                       │ Y
                       ▼
        ┌──────────────────────────────┐
        │   End Heap Building Process   │
        └──────────────────────────────┘
```

Fig. 26

```
                ( Start Down Heap Process )

                          │
                          ▼
          ┌─────────────────────────────────┐
          │ Determine The Number Of Children │
          │ From The Index Of Parent Element │  S60
          │ And The Number Of Elements In The│
          │ Heap Structure To Be Handled     │
          └─────────────────────────────────┘
                          │
                          ▼                S61
                     ╱         ╲
                    ╱  Is The   ╲        Y
                   ╱ Number Of   ╲──────────────────┐
                   ╲ Children     ╱                  │
                    ╲  "0" ?     ╱                    │
                     ╲         ╱                      │
                       N │                            ▼
                         ▼                  ( End Down Heap Process )
                     ╱         ╲    S62
                    ╱  Is The   ╲
                   ╱ Number Of   ╲────────Y──────────┐
                   ╲ Children     ╱                  │
                    ╲  "1" ?     ╱                    │
                     ╲         ╱                      │
                       N │                            │
                         ▼                            │
          ┌─────────────────────────┐                │
          │ Rank Comparison Process  │  S64          │
          │ Between Two Children     │               │
          └─────────────────────────┘                │
                         │                            │
                         ▼              S65           ▼                 S63
          ┌─────────────────────────┐    ┌─────────────────────────┐
          │ Set The Higher Rank Child As │  │ Set The Single Child As   │
          │ Comparison Object        │    │ Comparison Object         │
          └─────────────────────────┘    └─────────────────────────┘
                         │                            │
                         ▼◄───────────────────────────┘
          ┌───────────────────────────────┐
          │ Rank Comparison Process Between │  S66
          │ Parent Element And Child Element│
          │ As Comparison Object            │
          └───────────────────────────────┘
                         │
                         ▼              S67
                     ╱         ╲
                    ╱  Is The   ╲        Y
                   ╱ Rank Of     ╲──────────────────┐
                   ╲ Parent       ╱                  │
                    ╲ Higher ?   ╱                    ▼
                     ╲         ╱           ( End Down Heap Process )
                       N │
                         ▼
          ┌─────────────────────────┐
          │ Swap The Value Of Parent │  S68
          │ Element And The Value Of Child│
          │ Element                  │
          └─────────────────────────┘
                         │
                         ▼
          ┌─────────────────────────┐
          │ Set Child Element Whose Value Is │  S69
          │ Swapped As Next Parent   │
          └─────────────────────────┘
                         │
                         └──────► (back to S60)
```

# Fig. 27

Start Rank Comparison Process

Compare Minimum Y-Coordinates Of Elements "A" And "B" With Y-Coordinate Of Top Line — **S80**

Is Only The Minimum Y-Coordinate Of "A" Smaller Than Y-Coordinate Of Top Line ? — **S81**

Y → Result: The Rank Of "A" Is Higher — **S82** → ①

N

Is Only The Minimum Y-Coordinate Of "B" Smaller Than Y-Coordinate Of Top Line ? — **S83**

Y → Result: The Rank Of "B" Is Higher — **S84** → ①

N

Are Both The Minimum Y-Coordinates Of "A" And "B" Smaller Than Y-Coordinate Of Top Line ? — **S85**

Y → Compare Depth Values — **S86**

→ Depth Value Of "A" ▪ Depth Value Of "B" ? — **S87**

Y → Result: The Rank Of "A" Is Higher — **S88**

N → Result: The Rank Of "B" Is Higher — **S89**

N (from S85)

Compare Minimum Y-Coordinates Of Elements "A" And "B" — **S90**

Minimum Y-Coordinate Of "A" = Minimum Y-Coordinate Of "B" ? — **S91**

Y → (to S86)

N

Minimum Y-Coordinate Of "A" < Minimum Y-Coordinate Of B" ? — **S92**

N → Result: The Rank Of "B" Is Higher — **S94**

Y → Result: The Rank Of "A" Is Higher — **S93**

① →

End Rank Comparison Process

## INTERNATIONAL SEARCH REPORT

| International application No. |
| --- |
| PCT/JP2005/024214 |

A. CLASSIFICATION OF SUBJECT MATTER
*G06T15/00*(2006.01), *G06T15/40*(2006.01)

According to International Patent Classification (IPC) or to both national classification and IPC

B. FIELDS SEARCHED

Minimum documentation searched (classification system followed by classification symbols)
G06T15/00, G06T15/40, G06T17/40

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 9-245194 A (Sony Computer Entertainment Inc.), | 1,8,10,13, 18,25,27,30 |
| Y | 19 September, 1997 (19.09.97), Par. No. [0012]; Fig. 7 (Family: none) | 15,32 |
| Y | JP 10-201947 A (Sega Enterprises, Ltd.), 04 August, 1998 (04.08.98), Par. No. [0135] & US 6234901 B1 | 15,32 |
| A | JP 2000-259860 A (Square, Co., Ltd.), 22 September, 2000 (22.09.00), Full text; all drawings & US 6478680 B1 | 1-34 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 February, 2006 (03.02.06) | 14 February, 2006 (14.02.06) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**INTERNATIONAL SEARCH REPORT**

International application No.

PCT/JP2005/024214

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-85308 A (Sony Corp.), 31 March, 1995 (31.03.95), Full text; all drawings & US 5805135 A & EP 0633533 A3 | 1-34 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6348861 A
- JP 7282270 A